# EUROPEAN PATENT APPLICATION

(11) **EP 4 671 682 A1**
(43) Date of publication of application: **31.12.2025**
(21) Application number: 25183578.1
(22) Date of filing: 18.06.2025
(51) Int. Cl.: G01C 19/5614

(54) **PHYSICAL QUANTITY DETECTION DEVICE**

(30) Priority: 26.06.2024 JP 2024102696
(71) Applicant: Seiko Epson Corporation, Tokyo 160-8801 (JP)
(72) Inventor: SASAKI, Shogo, Suwa-shi, Nagano, 392-8502 (JP)
(74) Representative: MERH-IP Matias Erny Reichl Hoffmann Patentanwälte PartG mbB

(57) **Abstract**

A physical quantity detection device 1 includes a physical quantity detection element 10 and a circuit device 20. The physical quantity detection element 10 includes a detection arm AS1 including detection electrodes EL1A and EL1B and a detection arm AS2 including detection electrodes EL2A and EL2B. The circuit device 20 includes terminals T1, T2, T3, and T4 connected to the detection electrodes EL1A, EL1B, EL2A, and EL2B, and an amplifier circuit 120. The amplifier circuit 120 includes a differential amplifier circuit 128, a switch SW1A provided between the terminal T1 and an input node NI1 of the differential amplifier circuit 128, a switch SW1B provided between the terminal T2 and an input node NI2 of the differential amplifier circuit 128, a switch SW2A provided between the terminal T3 and the input node NI2, and a switch SW2B provided between the terminal T4 and the input node NI1.

## Description

The present application is based on, and claims priority from JP Application Serial Number 2024-102696, filed June 26, 2024, the disclosure of which is hereby incorporated by reference herein in its entirety.

### BACKGROUND

### 1. Technical Field

The present disclosure relates to a physical quantity detection device and the like.

### 2. Related Art

JP-A-2015-184124 discloses a physical quantity detection device in which detection sensitivity is improved by inputting detection signals from both positive and negative electrodes of a detection arm to a detection circuit without grounding one of the positive and negative electrodes.

However, in the physical quantity detection device of JP-A-2015-184124, a first detection electrode of a first detection arm and a fourth detection electrode of a second detection arm are electrically connected, in order to input a detection signal from the first detection electrode of the first detection arm and a detection signal from the fourth detection electrode of the second detection arm to a first input node of an amplifier circuit. In addition, a second detection electrode of the first detection arm and a third detection electrode of the second detection arm are electrically connected, in order to input a detection signal from the second detection electrode of the first detection arm and a detection signal from the third detection electrode of the second detection arm to a second input node of the amplifier circuit. Therefore, since it cannot be determined whether an unnecessary signal is generated from the first detection arm or the second detection arm, it is not possible to individually measure the vibration characteristics of the first detection arm and the second detection arm. For this reason, appropriate balance tuning or the like cannot be performed, and it is difficult to improve the performance of the physical quantity detection device.

### SUMMARY

An aspect of the present disclosure relates to a physical quantity detection device including a physical quantity detection element including a plurality of detection arms, a plurality of drive arms, and a base portion, and a circuit device that detects a physical quantity based on a plurality of detection signals from the plurality of detection arms of the physical quantity detection element. The physical quantity detection element includes, as the plurality of detection arms, a first detection arm including a first detection electrode and a second detection electrode and extending from the base portion, and a second detection arm including a third detection electrode and a fourth detection electrode and extending from the base portion in a direction opposite to a direction in which the first detection arm extends from the base portion. The circuit device includes a first terminal connected to the first detection electrode, a second terminal connected to the second detection electrode, a third terminal connected to the third detection electrode, a fourth terminal connected to the fourth detection electrode, and an amplifier circuit. The amplifier circuit includes a differential amplifier circuit, a first switch provided between the first terminal and a first input node of the differential amplifier circuit, a second switch provided between the second terminal and a second input node of the differential amplifier circuit, a third switch provided between the third terminal and the second input node of the differential amplifier circuit, and a fourth switch provided between the fourth terminal and the first input node of the differential amplifier circuit.

### BRIEF DESCRIPTION OF THE DRAWINGS

FIG. 1 illustrates a configuration example of a physical quantity detection device of a present embodiment.
FIG. 2 is a diagram for explaining the operation of a physical quantity detection element.
FIG. 3 illustrates a detailed configuration example of a circuit device.
FIG. 4 is a signal waveform diagram for explaining the operation of an amplifier circuit.
FIG. 5 is an explanatory view of a first comparative example.
FIG. 6 is an explanatory view of a second comparative example.
FIG. 7 illustrates a first configuration example of the amplifier circuit.
FIG. 8 is a diagram illustrating the connection of switches of the first configuration example at the time of inspection of a first detection arm.
FIG. 9 is a diagram illustrating the connection of the switches of the first configuration example at the time of inspection of a second detection arm.
FIG. 10 is an operation explanatory diagram of the first configuration example.
FIG. 11 illustrates a second configuration example of the amplifier circuit.
FIG. 12 is a diagram illustrating the connection of switches of the second configuration example at the time of inspection of the first detection arm.
FIG. 13 is a diagram illustrating the connection of the switches of the second configuration example at the time of inspection of the second detection arm.
FIG. 14 is an operation explanatory diagram of the second configuration example.
FIG. 15 illustrates a third configuration example of the amplifier circuit.
FIG. 16 is a diagram illustrating the connection of switches of the third configuration example at the time of inspection of the first detection arm.
FIG. 17 is a diagram illustrating the connection of the switches of the third configuration example at the time of inspection of the second detection arm.
FIG. 18 is an operation explanatory diagram of the third configuration example.

### DESCRIPTION OF EMBODIMENTS

The present embodiment will be described below. Note that the present embodiment described below does not unduly limit the scope of the claims. In addition, not all of the configurations described in the present embodiment are necessarily essential configuration requirements.

### 1. Physical Quantity Detection Device

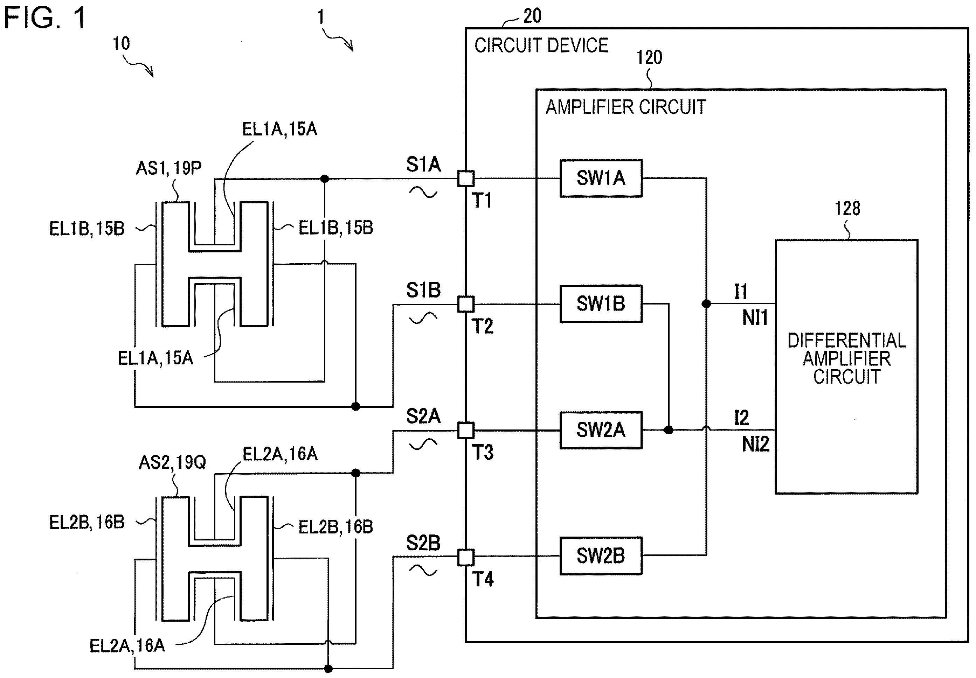

FIG. 1 is a diagram illustrating a configuration example of a physical quantity detection device 1 of the present embodiment. As illustrated in FIG. 1, the physical quantity detection device 1 of the present embodiment includes a physical quantity detection element 10 and a circuit device 20. The physical quantity detection element 10 includes a plurality of detection arms, a plurality of drive arms, and a base portion. In FIG. 1, the physical quantity detection element 10 includes detection arms AS1 and AS2 as the plurality of detection arms. The circuit device 20 detects a physical quantity based on a plurality of detection signals from the plurality of detection arms of the physical quantity detection element 10. The physical quantity detection device 1 is not limited to the configuration illustrated in FIG. 1, and various modifications such as omitting some of the constituent elements or adding other constituent elements can be made. For example, the physical quantity detection device 1 may include a support substrate that supports the physical quantity detection element 10. The support substrate includes a frame portion, an element mounting portion, and a plurality of beam portions. The element mounting portion is provided inside the frame portion, and the physical quantity detection element 10 is mounted thereon. The beam portions support the element mounting portion inside the frame portion. A terminal of the physical quantity detection element 10 and a terminal of the circuit device 20 are electrically connected to each other via the support substrate. In addition, the physical quantity detection device 1 can also include a package that accommodates the physical quantity detection element 10 and the circuit device 20. The package may include a base having a recessed portion which opens upward, and a lid which is bonded to the upper surface of the base so as to form an accommodation space for the physical quantity detection device 1 and the circuit device 20 between the lid and the base.

The physical quantity detection element 10 is an element for detecting a physical quantity, and can also be referred to as, for example, a physical quantity transducer or a vibration element. The physical quantity detection element 10 includes, for example, a vibrator element, and detects a physical quantity using the vibration of the vibrator element. For example, when the physical quantity detection element 10 is a gyro sensor element, an angular velocity is detected as the physical quantity. The gyro sensor element is, for example, a sensor element having a piezoelectric vibrator element formed of a thin plate made of a piezoelectric material such as quartz crystal. Specifically, the gyro sensor element is a sensor element having a vibrator element of a double T shape, a tuning fork type, an H shape, or the like formed of a Z-cut quartz crystal substrate or the like. Alternatively, a micro-electromechanical system (MEMS) sensor element may be used as the gyro sensor element. The physical quantity detected by the physical quantity detection element 10 may be a physical quantity other than the angular velocity, for example, an angular acceleration, an angle, an acceleration, a velocity, a movement distance, or a pressure.

The circuit device 20 is, for example, an integrated circuit device that is referred to as an integrated circuit (IC). For example, the circuit device 20 is an IC manufactured by a semiconductor process, and is a semiconductor chip in which a circuit element is formed on a semiconductor substrate. The circuit device 20 includes terminals T1, T2, T3, and T4 and an amplifier circuit 120.

The terminals T1, T2, T3, and T4 are a first terminal, a second terminal, a third terminal, and a fourth terminal, respectively. The terminals T1, T2, T3, and T4 are, for example, pads of the circuit device 20. For example, in the pad region, a metal layer is exposed from a passivation film which is an insulating layer, and the exposed metal layer constitutes the pads, which are the terminals of the circuit device 20.

The amplifier circuit 120 includes switches SW1A, SW1B, SW2A, and SW2B and a differential amplifier circuit 128. The switches SW1A, SW1B, SW2A, and SW2B are a first switch, a second switch, a third switch, and a fourth switch, respectively. For example, the switches SW1A, SW1B, SW2A, and SW2B can be realized by transistors, and specifically, can be realized by NMOS or PMOS transistors or the like. The details of the amplifier circuit 120 will be described later.

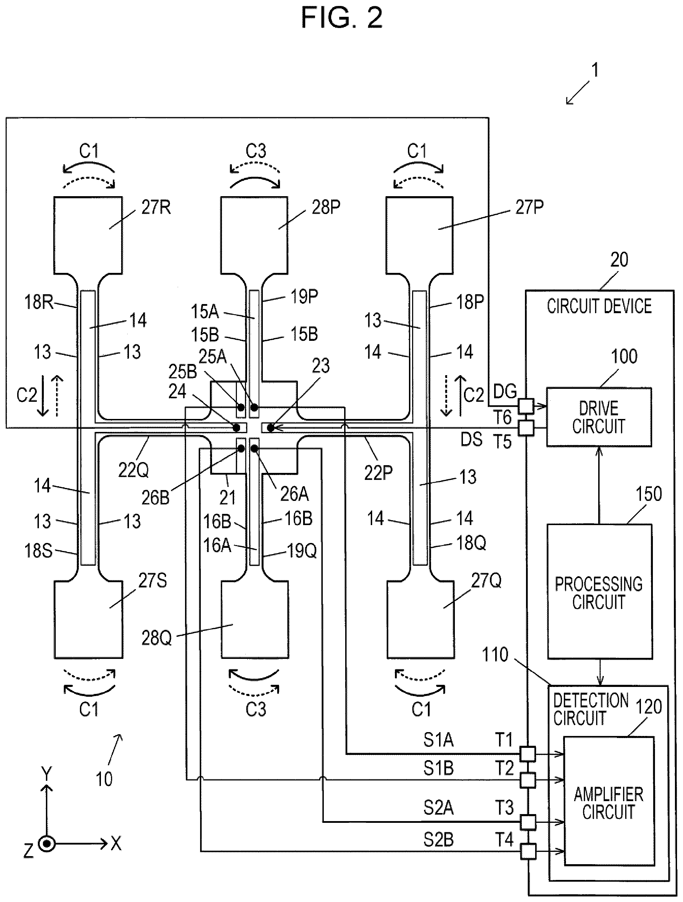

Next, detailed examples of the physical quantity detection element 10 and the circuit device 20 will be described. FIG. 2 is a diagram illustrating an example of the operation of the detailed example of the physical quantity detection element 10. Hereinafter, a case where the physical quantity detection element 10 is a gyro sensor element, specifically, a double T-shaped gyro sensor element will be mainly described as an example. However, as described above, the physical quantity detection element 10 may be a gyro sensor element other than the double T-shaped gyro sensor or a physical quantity detection element other than the gyro sensor element.

For example, when a Z-axis is a thickness direction of the physical quantity detection element 10, the physical quantity detection element 10, which is a gyro sensor element, detects an angular velocity ω around the Z-axis. An X-axis and a Y-axis are coordinate axes orthogonal to the Z-axis, and the X-axis and the Y-axis are orthogonal to each other. As illustrated in FIG. 2, the physical quantity detection device 1 includes the physical quantity detection element 10 and the circuit device 20. The circuit device 20 includes a drive circuit 100, a detection circuit 110, and a processing circuit 150. Note that modifications such as omitting some of these constituent elements or adding other constituent elements can be made.

The physical quantity detection element 10 includes drive arms 18P, 18Q, 18R, and 18S, detection arms 19P and 19Q, a base portion 21, and coupling arms 22P and 22Q. The detection arms 19P and 19Q extend in a positive Y-axis direction and a negative Y-axis direction with respect to the rectangular base portion 21, respectively. In addition, the coupling arms 22P and 22Q extend in a positive X-axis direction and a negative X-axis direction with respect to the base portion 21, respectively. The drive arms 18P and 18Q extend from the tip end portion of the coupling arm 22P in the positive Y-axis direction and the negative Y-axis direction, respectively. The drive arms 18R and 18S extend from the tip end portion of the coupling arm 22Q in the positive Y-axis direction and the negative Y-axis direction, respectively.

The physical quantity detection element 10 includes weight portions 27P, 27Q, 27R, 27S, 28P, and 28Q. These weight portions are also referred to as hammer head portions. The weight portions 27P and 27Q are provided on the tip end sides of the drive arms 18P and 18Q, respectively, and the weight portions 27R and 27S are provided on the tip end sides of the drive arms 18R and 18S, respectively. Further, the weight portions 28P and 28Q are provided on the tip end sides of the detection arms 19P and 19Q, respectively. The weight portions 27P, 27Q, 27R, and 27S provided at the drive arms 18P, 18Q, 18R, and 18S are balance adjusting portions, and are used to adjust the balance of the vibration of the physical quantity detection element 10. For example, the balance of the vibration of the physical quantity detection element 10 is adjusted by performing trimming in which metals of the weight portions 27P, 27Q, 27R, and 27S are cut by a laser beam at the time of manufacturing the physical quantity detection device 1.

The vibrator element of the physical quantity detection element 10 can be formed of, for example, a piezoelectric material such as quartz crystal, lithium tantalate, or lithium niobate. Among these, quartz crystal is preferably used as the constituent material of the vibrator element. The X-axis, the Y-axis, and the Z-axis are also referred to as an electric axis, a mechanical axis, and an optical axis of a quartz crystal substrate, respectively. The quartz crystal substrate is formed of a Z-cut quartz crystal plate or the like having a thickness in the Z-axis direction.

A drive electrode 13 is formed on upper surfaces and lower surfaces of the drive arms 18P and 18Q, and a drive electrode 14 is formed on right side surfaces and left side surfaces of the drive arms 18P and 18Q. A drive electrode 14 is formed on upper surfaces and lower surfaces of the drive arms 18R and 18S, and a drive electrode 13 is formed on right side surfaces and left side surfaces of the drive arms 18R and 18S. A drive signal DS from the drive circuit 100 is supplied to the drive electrodes 13, and a feedback signal DG from the drive electrodes 14 is input to the drive circuit 100. For example, the drive signal DS is output from the drive circuit 100 via a terminal T5 of the circuit device 20, and the feedback signal DG is input to the drive circuit 100 via a terminal T6 of the circuit device 20.

A detection electrode 15A is formed on upper and lower surfaces of the detection arm 19P, and a detection electrode 15B is formed on right and left side surfaces of the detection arm 19P. A detection electrode 16A is formed on upper and lower surfaces of the detection arm 19Q, and a detection electrode 16B is formed on right and left side surfaces of the detection arm 19Q. The detection electrodes 15A, 15B, 16A, and 16B are a first detection electrode, a second detection electrode, a third detection electrode, and a fourth detection electrode, respectively.

Detection signals S1A, S1B, S2A, and S2B from the detection electrodes 15A, 15B, 16A, and 16B are input to the detection circuit 110. Specifically, the detection circuit 110 includes the amplifier circuit 120. For example, the amplifier circuit 120 is realized by a charge amplifier or the like that performs charge/voltage conversion (Q/V conversion). The detection signal S1A, which is a first detection signal from the detection electrode 15A formed on the upper surface and the lower surface of the detection arm 19P, is input to the amplifier circuit 120 via the terminal T1, which is the first terminal. The detection signal S1B, which is a second detection signal from the detection electrode 15B formed on the right side surface and the left side surface of the detection arm 19P, is input to the amplifier circuit 120 via the terminal T2, which is the second terminal. The detection signal S2A, which is a third detection signal from the detection electrode 16A formed on the upper surface and the lower surface of the detection arm 19Q, is input to the amplifier circuit 120 via the terminal T3, which is a third terminal. The detection signal S2B, which is a fourth detection signal from the detection electrode 16B formed on the right side surface and the left side surface of the detection arm 19Q, is input to the amplifier circuit 120 via the terminal T4, which is a fourth terminal. For example, the detection signals S1A and S2B are detection signals having the same phase as described later. In addition, the detection signals S2A and S1B are detection signals having the same phase. The detection signals S2A and S1B are, for example, 180 degrees out of phase with the detection signals S1A and S2B, and have a polarity different from the detection signals S1A and S2B. With such a configuration, it is possible to realize double wiring capable of substantially doubling the area of the detection electrodes as will be described later.

Note that groove portions (not illustrated) for improving an electric field effect between the electrodes are provided on the upper and lower surfaces of the drive arms 18P, 18Q, 18R, and 18S and the upper and lower surfaces of the detection arms 19P and 19Q. By providing the groove portions, a relatively large amount of charge can be generated with a relatively small amount of distortion.

The base portion 21 is provided with drive terminals 23 and 24 and detection terminals 25A, 25B, 26A, and 26B. The drive signal DS from the drive circuit 100 is input to the drive terminal 23, and the feedback signal DG to the drive circuit 100 is output from the drive terminal 24. The detection terminals 25A and 25B of the detection arm 19P output the detection signals S1A and S1B, and the detection terminals 26A and 26B of the detection arm 19Q output the detection signals S2A and S2B.

The drive circuit 100 included in the circuit device 20 is a circuit that drives the physical quantity detection element 10. The drive circuit 100 outputs the drive signal DS to the physical quantity detection element 10, thereby driving the physical quantity detection element 10 so as to vibrate the vibrator element of the physical quantity detection element 10. The drive signal DS is, for example, a rectangular wave signal, but may be a sinusoidal signal.

The detection circuit 110 detects a physical quantity based on the detection signals S1A, S1B, S2A, and S2B from the physical quantity detection element 10. In FIG. 2, an angular velocity is detected as the physical quantity. The detection signals S1A, S1B, S2A, and S2B are, for example, detection signals of a physical quantity having the drive frequency of the drive signal DS as a carrier frequency. The detection circuit 110 performs, for example, synchronous detection of signals based on the detection signals S1A, S1B, S2A, and S2B using a synchronization signal, thereby detecting a physical quantity (angular velocity) in the detection signals S1A, S1B, S2A, and S2B and outputting detection data.

The processing circuit 150 performs processing such as digital signal processing on the detection data from the detection circuit 110. The processing circuit 150 performs the digital signal processing including digital filter processing on the detection data from the detection circuit 110. Then, the detection data after the digital filter processing by the processing circuit 150 is output as, for example, a final detection value of the physical quantity. Note that the signal processing performed by the processing circuit 150 is not limited to the digital filter processing, and the processing circuit 150 can perform various kinds of signal processing such as temperature compensation processing and various kinds of correction processing.

Next, a detailed operation in a case where the physical quantity detection element 10 is a gyro sensor element will be described. When the drive circuit 100 applies the drive signal DS to the drive electrodes 13, the drive arms 18P, 18Q, 18R, and 18S perform flexural vibration as indicated by arrows C1 in FIG. 2 due to an inverse piezoelectric effect. For example, a vibration mode indicated by solid-line arrows and a vibration mode indicated by dotted-line arrows are repeated at a predetermined frequency. That is, the flexural vibration is performed, in which the tip ends of the drive arms 18P and 18R repeatedly approach and separate from each other and the tip ends of the drive arms 18Q and 18S also repeatedly approach and separate from each other. In this case, since the drive arms 18P and 18Q and the drive arms 18R and 18S vibrate in line symmetry with respect to the X-axis passing through the position of the center of gravity of the base portion 21, the base portion 21, the coupling arms 22P and 22Q, and the detection arms 19P and 19Q hardly vibrate.

In this state, when an angular velocity with the Z-axis as a rotational axis is applied to the physical quantity detection element 10, the drive arms 18P, 18Q, 18R, and 18S vibrate as indicated by arrows C2 due to the Coriolis force. That is, the Coriolis force in directions indicated by arrows C2 orthogonal to directions indicated by arrows C1 and the Z-axis direction acts on the drive arms 18P, 18Q, 18R, and 18S, thereby generating vibration components in the directions indicated by arrows C2. The vibrations in the directions indicated by arrows C2 are transmitted to the base portion 21 via the coupling arms 22P and 22Q, and the detection arms 19P and 19Q thereby perform flexural vibration in directions indicated by arrows C3. Charge signals generated by a piezoelectric effect due to the flexural vibration of the detection arms 19P and 19Q are input to the detection circuit 110 as the detection signals S1A, S1B, S2A, and S2B, and the angular velocities around the Z-axis are detected.

For example, when the angular velocity of the physical quantity detection element 10 around the Z-axis is ω, the mass of the physical quantity detection element 10 is m, and the vibration velocity of the physical quantity detection element 10 is v, the Coriolis force is expressed as Fc = 2m·v·ω. Therefore, when the detection circuit 110 detects a desired signal which is a signal corresponding to the Coriolis force, the angular velocity ω around the Z-axis can be obtained.

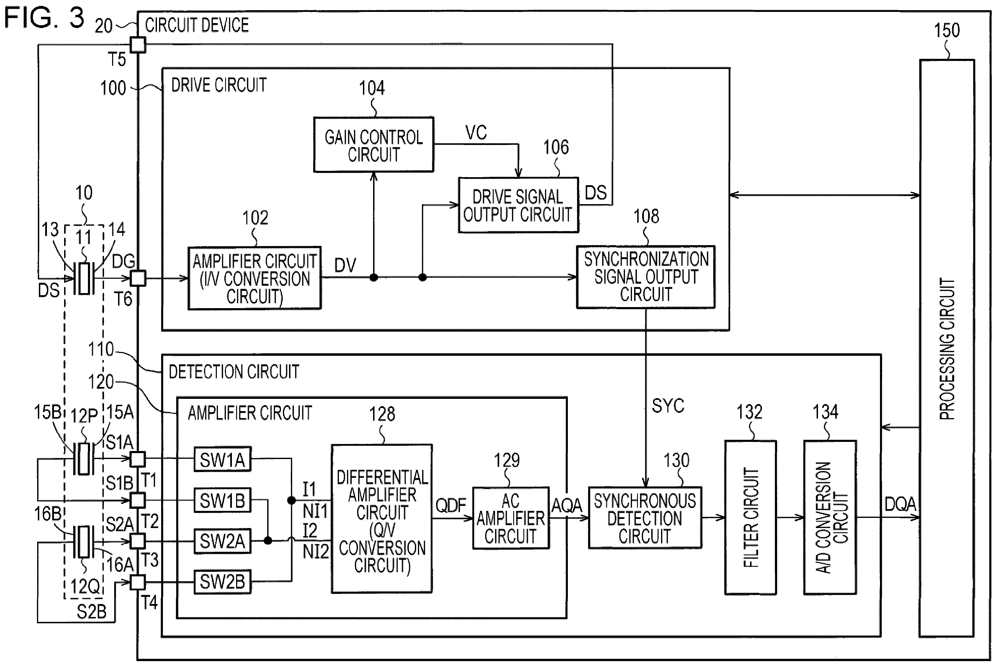

FIG. 3 illustrates a detailed configuration example of the circuit device 20. The circuit device 20 is not limited to the configuration illustrated in FIG. 3, and various modifications such as omitting some of the constituent elements or adding other constituent elements can be made. Connection in the present embodiment is electrical connection. The electrical connection is a connection that allows an electrical signal to be transmitted and allows information to be transmitted by an electrical signal. The electrical connection may be connection via a passive element or the like.

The physical quantity detection element 10, which is a sensor element, includes a drive vibrator element 11, detection vibrator elements 12P and 12Q, the drive electrodes 13 and 14, and the detection electrodes 15A, 15B, 16A, and 16B. The drive vibrator element 11 corresponds to the drive arms 18P, 18Q, 18R, and 18S in FIG. 2. The detection vibrator element 12P corresponds to the detection arm 19P in FIG. 2, and the detection vibrator element 12Q corresponds to the detection arm 19Q. The vibrator elements 11, 12P, and 12Q are, for example, piezoelectric vibrator elements formed of thin plates of a piezoelectric material such as quartz crystal.

The drive signal DS from the drive circuit 100 is supplied to the drive electrodes 13, and the drive vibrator element 11 thereby vibrates. Then, the feedback signal DG generated by the vibration of the vibrator element 11 is input from the drive electrodes 14 to the drive circuit 100. Further, the detection vibrator elements 12P and 12Q vibrate due to the vibration of the drive vibrator element 11. Charges generated on the detection electrodes 15A and 15B due to the vibration of the vibrator element 12P are input to the terminals T1 and T2 of the circuit device 20 as the detection signals S1A and S1B, respectively. In addition, charges generated on the detection electrodes 16A and 16B due to the vibration of the vibrator element 12Q are input to the terminals T3 and T4 of the circuit device 20 as the detection signals S2A and S2B, respectively. The circuit device 20 detects a physical quantity such as an angular velocity based on the detection signals S1A, S1B, S2A, and S2B.

The drive circuit 100 includes an amplifier circuit 102, a gain control circuit 104, a drive signal output circuit 106, and a synchronization signal output circuit 108.

The amplifier circuit 102 amplifies the feedback signal DG from the physical quantity detection element 10. The amplifier circuit 102, which is, for example, an I/V conversion circuit, converts the feedback signal DG, which is a current signal from the physical quantity detection element 10, into a voltage signal DV and outputs the voltage signal DV.

The gain control circuit 104 outputs a control voltage VC to the drive signal output circuit 106 to control the amplitude of the drive signal DS. The gain control circuit 104, which is, for example, an AGC circuit, automatically adjusts the gain variably such that the amplitude of the feedback signal DG from the physical quantity detection element 10 is constant, in order to keep the sensor sensitivity constant. The gain control circuit 104 includes a full-wave rectifier circuit that performs full-wave rectification of an alternating-current signal DV output from the amplifier circuit 102, and an integrating circuit that performs integration processing on a signal from the full-wave rectifier circuit. Then, the gain control circuit 104 outputs the control voltage VC obtained by the integration processing to the drive signal output circuit 106.

The drive signal output circuit 106 outputs a drive signal DS based on the signal DV amplified by the amplifier circuit 102. The drive signal output circuit 106 outputs, for example, a rectangular wave drive signal DS such that the control voltage VC from the gain control circuit 104 becomes a high-level voltage, which is a voltage at the high potential side. For example, the drive signal output circuit 106 may output a sinusoidal drive signal DS.

The synchronization signal output circuit 108 outputs a synchronization signal SYC. The synchronization signal SYC is a signal generated based on the drive signal DS. Specifically, the synchronization signal SYC is a signal corresponding to the drive signal DS, and is, for example, a clock signal having the same frequency as the drive signal DS.

The detection circuit 110 includes the amplifier circuit 120, a synchronous detection circuit 130, a filter circuit 132, and an A/D conversion circuit 134. The amplifier circuit 120 includes the switches SW1A, SW1B, SW2A, and SW2B, the differential amplifier circuit 128, and an AC amplifier circuit 129. Note that the configurations of the detection circuit 110 and the amplifier circuit 120 are not limited thereto. For example, as will be described later, various modifications can be made such as providing another circuit such as an amplifier circuit between the differential amplifier circuit 128 and the switches SW1A, SW1B, SW2A, and SW2B, or between the switches SW1A, SW1B, SW2A, and SW2B and the terminals T1, T2, T3, and T4, or omitting the configuration of the AC amplifier circuit 129.

The switch SW1A is provided between the terminal T1 and an input node NI1 of the differential amplifier circuit 128, and the switch SW1B is provided between the terminal T2 and an input node NI2 of the differential amplifier circuit 128. The switch SW2A is provided between the terminal T3 and the input node NI2 of the differential amplifier circuit 128, and the switch SW2B is provided between the terminal T4 and the input node NI1 of the differential amplifier circuit 128. The input node NI1 is a first input node and is, for example, a node of an inverting input terminal of the differential amplifier circuit 128. The input node NI2 is a second input node and is, for example, a node of a non-inverting input terminal of the differential amplifier circuit 128.

With such a configuration, the detection signal S1A input via the terminal T1 and the detection signal S2B input via the terminal T4 are input to the input node NI1 of the differential amplifier circuit 128 via the switch SW1A and the switch SW2B, respectively. For example, a first sum signal composed of the detection signal S1A and the detection signal S2B is input to the input node NI1 of the differential amplifier circuit 128. In addition, the detection signal S2A input via the terminal T3 and the detection signal S1B input via the terminal T2 are input to the input node NI2 of the differential amplifier circuit 128 via the switch SW2A and the switch SW1B, respectively. For example, a second sum signal composed of the detection signal S2A and the detection signal S1B is input to the input node NI2 of the differential amplifier circuit 128. The differential amplifier circuit 128 differentially amplifies the first sum signal and the second sum signal. As will be described later, since the first sum signal and the second sum signal are, for example, 180 degrees out of phase, the physical quantity signals included in the detection signals are amplified by differentially amplifying the first sum signal and the second sum signal. Here, the differential amplifier circuit 128 is, for example, a continuous charge/voltage conversion circuit (Q/V conversion circuit) having a feedback resistor, and converts a detection signal, which is a charge signal, into a voltage signal. The AC amplifier circuit 129 amplifies an output signal QDF of the differential amplifier circuit 128, and outputs the amplified signal as an output signal AQA of the amplifier circuit 120. The AC amplifier circuit 129 performs, for example, gain adjustment on the signal.

The synchronous detection circuit 130 performs synchronous detection on the output signal AQA of the amplifier circuit 120 using the synchronization signal SYC. This makes it possible to extract a physical quantity signal, which is a desired signal included in the output signal AQA, and detect a physical quantity.

The filter circuit 132 performs filter processing such as low-pass filter processing on the output signal of the synchronous detection circuit 130. The filter circuit 132 functions as a pre-filter of the A/D conversion circuit 134 in the subsequent stage. The filter circuit 132 also functions as a circuit that attenuates an unnecessary signal that has not been removed by the synchronous detection. The A/D conversion circuit 134 performs A/D conversion of an analog output signal from the filter circuit 132 and outputs digital detection data DQA.

The processing circuit 150 performs various kinds of digital signal processing on the detection data DQA of the physical quantity from the detection circuit 110. The processing circuit 150 performs temperature correction calculation based on the detection data DQA and temperature detection data. In addition, the processing circuit 150 performs temperature compensation processing on the detection data DQA based on a temperature correction value obtained by the temperature correction calculation. Then, the processing circuit 150 performs digital filter processing such as low-pass filter processing and notch filter processing on the detection data after the temperature compensation processing.

As described above, in the present embodiment, the charge signals from the detection electrodes 15B and 16B, in addition to the detection electrodes 15A and 16A, are input by the detection circuit 110, and the first sum signal composed of the detection signals S1A and S2B and the second sum signal composed of the detection signals S2A and S1B are input to the differential amplifier circuit 128 and differentially amplified. In this way, when the same physical quantity such as the angular velocity is detected, the amount of charge input to the detection circuit 110 increases, and thus it is possible to improve the detection sensitivity of the physical quantity. As a result, the S/N in the detection of the physical quantity improves, and noise reduction can be achieved.

### 2. Amplifier Circuit

Next, the amplifier circuit 120 of the present embodiment will be described in detail. As illustrated in FIG. 1, the amplifier circuit 120 includes the switches SW1A, SW1B, SW2A, and SW2B, and the differential amplifier circuit 128. The physical quantity detection element 10 includes the detection arms AS1 and AS2. The detection arms AS1 and AS2 in FIG. 1 are first and second detection arms, respectively, and correspond to the detection arms 19P and 19Q in FIG. 2.

The detection arm AS1 includes detection electrodes EL1A and EL1B. The detection electrodes EL1A and EL1B are first and second detection electrodes, respectively, and correspond to the detection electrodes 15A and 15B in FIG. 2. The detection arm AS2 includes detection electrodes EL2A and EL2B. The detection electrodes EL2A and EL2B are third and fourth detection electrodes, respectively, and correspond to the detection electrodes 16A and 16B in FIG. 2. Although not particularly limited, the detection electrodes EL1A and EL2A are electrodes formed on, for example, the upper surfaces and the lower surfaces of the detection arms AS1 and AS2, respectively. The detection electrodes EL1B and EL2B are electrodes formed on, for example, the right side surfaces and the left side surfaces of the detection arms AS1 and AS2, respectively. However, the surfaces on which the detection electrodes are formed may be opposite to those described above.

The terminal T1 is connected to the detection electrodes EL1A of the detection arm AS1, and the terminal T2 is connected to the detection electrodes EL1B of the detection arm AS1. That is, the first terminal (T1) is connected to the first detection electrodes (EL1A) of the first detection arm (AS1), and the second terminal (T2) is connected to the second detection electrodes (EL1B) of the first detection arm (AS1). Further, the terminal T3 is connected to the detection electrodes EL2A of the detection arm AS2, and the terminal T4 is connected to the detection electrodes EL2B of the detection arm AS2. That is, the third terminal (T3) is connected to the third detection electrodes (EL2A) of the second detection arm (AS2), and the fourth terminal (T4) is connected to the fourth detection electrodes (EL2B) of the second detection arm (AS2). Note that the connection between the detection electrodes and the terminals is electrical connection, and may be, for example, connection via wiring, terminals, or the like of a support substrate (relay substrate).

The detection signal S1A from the detection electrodes EL1A of the detection arm AS1 is input to the terminal T1, and the detection signal S1B from the detection electrodes EL1B of the detection arm AS1 is input to the terminal T2. That is, the first detection signal (S1A) from the first detection electrodes (EL1A) of the first detection arm (AS1) is input to the first terminal (T1), and the second detection signal (S1B) from the second detection electrodes (EL1B) of the first detection arm (AS1) is input to the second terminal (T2).

The detection signal S2A from the detection electrodes EL2A of the detection arm AS2 is input to the terminal T3, and the detection signal S2B from the detection electrodes EL2B of the detection arm AS2 is input to the terminal T4. That is, the third detection signal (S2A) from the third detection electrodes (EL2A) of the second detection arm (AS2) is input to the third terminal (T3), and the fourth detection signal (S2B) from the fourth detection electrodes (EL2B) of the second detection arm (AS2) is input to the fourth terminal (T4).

In the present embodiment, "1" and "2" in "1A", "1B", "2A", and "2B" correspond to "first" and "second" of the first detection arm (AS1) and the second detection arm (AS2), respectively, and "A" and "B" in "1A", "1B", "2A", and "2B" correspond to the upper and lower surfaces and the right and left side surfaces of the detection arms, respectively.

The amplifier circuit 120 includes the switches SW1A, SW1B, SW2A, and SW2B and the differential amplifier circuit 128. The switch SW1A is provided between the terminal T1 and the input node NI1 of the differential amplifier circuit 128, and the switch SW1B is provided between the terminal T2 and the input node NI2 of the differential amplifier circuit 128. That is, the first switch (SW1A) is provided between the first terminal (T1) and the first input node (NI1) of the differential amplifier circuit 128, and the second switch (SW1B) is provided between the second terminal (T2) and the second input node (NI2) of the differential amplifier circuit 128.

The switch SW2A is provided between the terminal T3 and the input node NI2 of the differential amplifier circuit 128, and the switch SW2B is provided between the terminal T4 and the input node NI1 of the differential amplifier circuit 128. That is, the third switch (SW2A) is provided between the third terminal (T3) and the second input node (NI2) of the differential amplifier circuit 128, and the fourth switch (SW2B) is provided between the fourth terminal (T4) and the first input node (NI1) of the differential amplifier circuit 128.

The input nodes NI1 and NI2 are the first input node and the second input node of the differential amplifier circuit 128, respectively. One of the input nodes NI1 and NI2 is one of the nodes of the inverting and non-inverting input terminals of the differential amplifier circuit 128, and the other of the input nodes NI1 and NI2 is the other of the nodes of the inverting and non-inverting input terminals. The differential amplifier circuit 128 differentially amplifies a signal 11 input to the input node NI1 and a signal I2 input to the input node NI2.

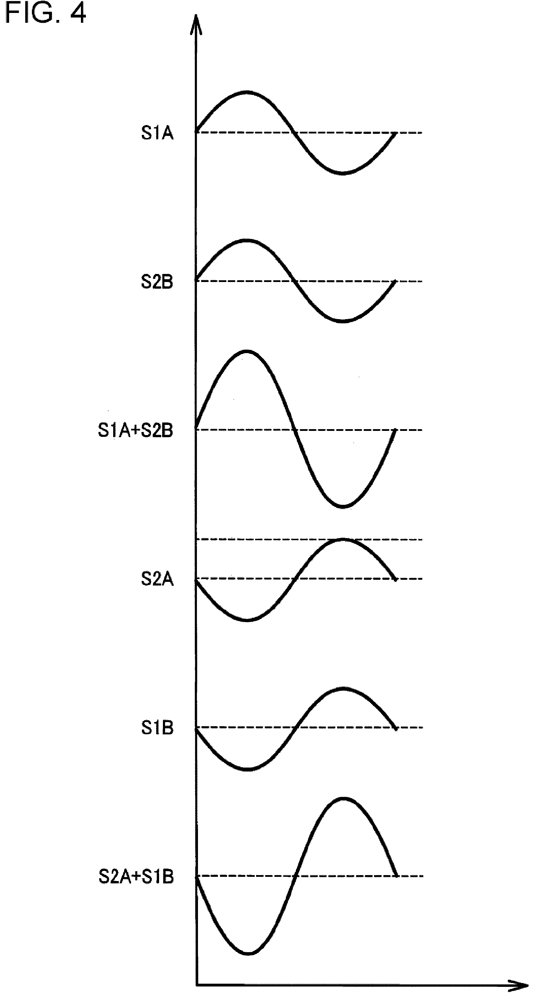

FIG. 4 is a signal waveform diagram for explaining the operation of the amplifier circuit 120 in an operation mode. In the operation mode, the switches SW1A, SW1B, SW2A, and SW2B of FIG. 1 are turned on, the terminals T1 and T4 are connected to the input node NI1 of the differential amplifier circuit 128, and the terminals T3 and T2 are connected to the input node NI2 of the differential amplifier circuit 128. Accordingly, the first sum signal, which is a sum signal composed of the detection signal S1A and the detection signal S2B, is input to the input node NI1 of the differential amplifier circuit 128 as the signal I1, and the second sum signal, which is a sum signal composed of the detection signal S2A and the detection signal S1B, is input to the input node NI2 of the differential amplifier circuit 128 as the signal I2.

As illustrated in FIG. 4, the detection signals S1A and S2B are in-phase signals. Therefore, the signal S1A+S2B, which is the first sum signal (combined signal) composed of the detection signals S1A and S2B, has approximately twice the amplitude of each of the detection signals S1A and S2B. The signal S1A+S2B, which is the first sum signal, is input to the input node NI1 of the differential amplifier circuit 128. For example, the signal S1A+S2B is input to the node of the inverting input terminal of the differential amplifier circuit 128.

As illustrated in FIG. 4, the detection signals S2A and S1B are in-phase signals. Therefore, the signal S2A+S1B, which is the second sum signal (combined signal) composed of the detection signals S2A and S1B, has approximately twice the amplitude of each of the detection signals S2A and S1B. The signal S2A+S1B, which is the second sum signal, is input to the input node NI2 of the differential amplifier circuit 128. For example, the signal S2A+S1B is input to the node of the non-inverting input terminal of the differential amplifier circuit 128.

The detection signals S1A and S2B and the detection signals S2A and S1B are 180 degrees out of phase, and the electrical polarities thereof are opposite to each other. For example, when the detection signals S1A and S2B have a first polarity which is one of the positive and negative polarities, the detection signals S2A and S1B have a second polarity which is the other of the positive and negative polarities.

For example, in the detection arm AS1, when positive charges are generated on the detection electrodes EL1A, negative charges are generated on the detection electrodes EL1B, and when negative charges are generated on the detection electrodes EL1A, positive charges are generated on the detection electrodes EL1B. Therefore, the detection signal S1A from the detection electrodes EL1A and the detection signal S1B from the detection electrodes EL1B are signals having opposite phases.

Similarly, in the detection arm AS2, when one of positive and negative charges is generated on the detection electrodes EL2A, the other of the positive and negative charges is generated on the detection electrodes EL2B. Therefore, the detection signal S2A from the detection electrodes EL2A and the detection signal S2B from the detection electrodes EL2B are signals having opposite phases.

As indicated by the solid-line arrows and the dotted-line arrows of C3 in FIG. 2, when the detection arm AS1 (19P) flexes in the positive X-axis direction due to the Coriolis force, the detection arm AS2 (19Q) flexes in the negative X-axis direction, and when the detection arm AS1 flexes in the negative X-axis direction, the detection arm AS2 flexes in the positive X-axis direction. Accordingly, when one of positive and negative charges is generated on the detection electrodes EL1A of the detection arm AS1, the other of positive and negative charges is generated on the detection electrodes EL2A of the detection arm AS2. Therefore, the detection signal S1A from the detection electrodes EL1A and the detection signal S2A from the detection electrodes EL2A are signals having opposite phases. Similarly, the detection signal S1B from the detection electrodes EL1B and the detection signal S2B from the detection electrodes EL2B are signals having opposite phases.

Therefore, as illustrated in FIG. 4, the detection signals S1A and S2B are signals having the same phase, the detection signals S2A and S1B are signals having the same phase, and the detection signals S1A and S2B and the detection signals S2A and S1B are signals having opposite phases.

As described above, in the amplifier circuit 120 of FIG. 1, the detection signal S1A, which is a charge signal from the detection electrodes EL1A, is combined with the detection signal S2B, which is a charge signal from the detection electrodes EL2B, and the resultant signal is input to the input node NI1 of the differential amplifier circuit 128 as a charge signal with twice the amplitude. In addition, the detection signal S2A, which is a charge signal from the detection electrodes EL2A, is combined with the detection signal S1B, which is a charge signal from the detection electrodes EL1B, and the resultant signal is input to the input node NI2 of the differential amplifier circuit 128 as a charge signal with twice the amplitude. Therefore, the area of the detection electrodes can be substantially doubled, and the detection sensitivity of the physical quantity of the physical quantity detection device 1 can be improved. In the present embodiment, the method of substantially doubling the area of the detection electrodes in this way is referred to as "double wiring" for convenience.

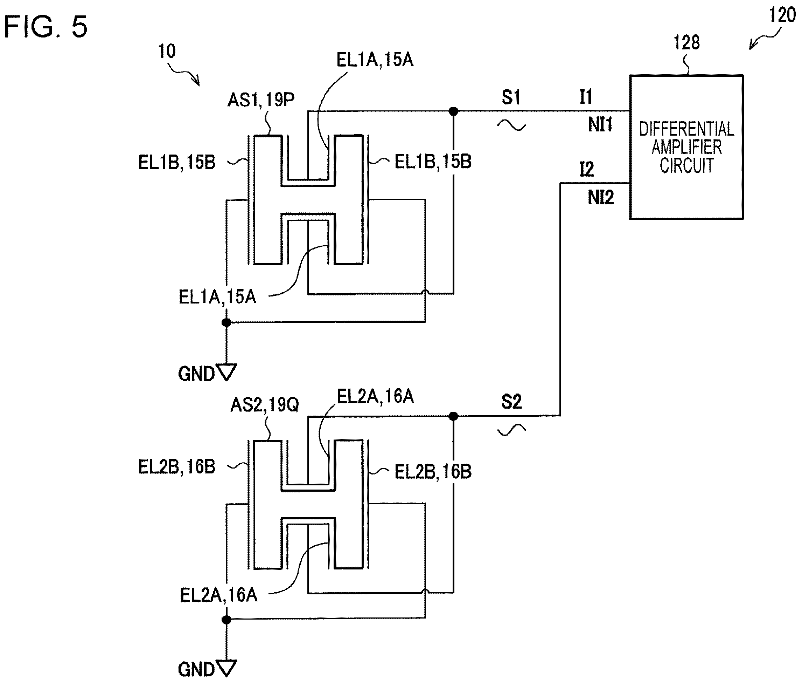

For example, FIG. 5 is a configuration example of a first comparative example of the present embodiment. The comparative example of FIG. 5 is different from FIG. 1 in that in FIG. 5, the detection electrodes EL1B of the detection arm AS1 and the detection electrodes EL2B of the detection arm AS2 are grounded. A detection signal S1 from the detection electrodes EL1A of the detection arm AS1 is input to the input node NI1 of the differential amplifier circuit 128, and a detection signal S2 from the detection electrodes EL2A of the detection arm AS2 is input to the input node NI2 of the differential amplifier circuit 128.

In the configuration of the first comparative example illustrated in FIG. 5, charges generated on the detection electrodes EL1B of the detection arm AS1 and charges generated on the detection electrodes EL2B of the detection arm AS2 are not input to the differential amplifier circuit 128 and are discharged to GND. Therefore, it is not possible to double the amplitude of the detection signals, and there is a disadvantage in that the detection sensitivity is low compared to the configuration of the present embodiment of FIG. 1.

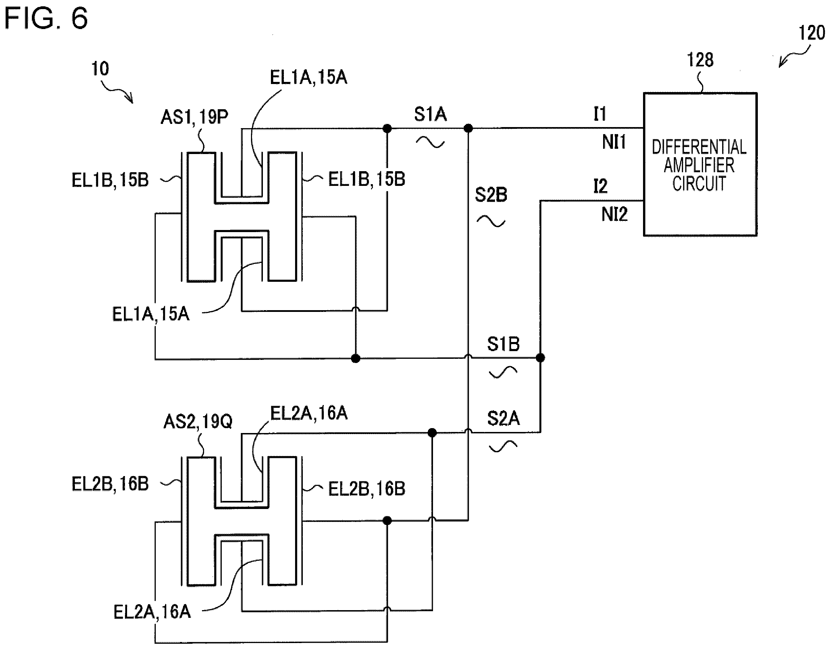

FIG. 6 illustrates a configuration example of a second comparative example of the present embodiment. In FIG. 6, the detection signal S1A from the detection electrodes EL1A of the detection arm AS1 and the detection signal S2B from the detection electrodes EL2B of the detection arm AS2 are input to the input node NI1 of the differential amplifier circuit 128. The detection signal S2A from the detection electrodes EL2A of the detection arm AS2 and the detection signal S1B from the detection electrodes EL1B of the detection arm AS1 are input to the input node NI2 of the differential amplifier circuit 128. However, in the second comparative example of FIG. 6, it is found that there is a problem in that balance tuning, which is the balance adjustment of the vibration of the physical quantity detection element 10, cannot be performed.

That is, in the physical quantity detection device 1, the vibration balance of each drive arm is poor in the initial state due to process variation or the like at the time of manufacturing, and unnecessary vibration occurs in the detection arms when the physical quantity detection element 10 is driven. Therefore, in balance tuning, the unnecessary vibration is reduced by trimming a metal weight film of each drive arm with an energy beam such as a laser beam to adjust the frequency, while measuring a detection signal generated due to the unnecessary vibration. In balance tuning, unnecessary signals generated from the two detection arms are individually measured for each detection arm, and the drive arm to be processed and the amount of processing on the drive arm are calculated according to the measured values.

However, in the second comparative example of FIG. 6, since the unnecessary signals generated from the two detection arms are combined and then input to each input node of the differential amplifier circuit 128. This causes a problem in that it is not possible to determine from which detection arm the measured unnecessary signal is generated, and it is not possible to calculate the drive arm to be processed and the amount of processing on the drive arm.

For example, if no angular velocity is generated when the drive arms are vibrated, the detection arms AS1 and AS2 should not ideally vibrate. However, before balance tuning, the detection arms AS1 and AS2 vibrate due to process variation or the like at the time of manufacturing. For this reason, in balance tuning, the unnecessary signals due to the unnecessary vibration of the detection arms AS1 and AS2 are measured, and the drive arm to be processed and the amount of processing on the drive arm are calculated based on the measured values.

In the configuration of the first comparative example of FIG. 5, the unnecessary vibration of the detection arm AS1 can be measured based on the output of the differential amplifier circuit 128, in which the unnecessary signal from the detection arm AS1 is input to the input node NI1 as the detection signal S1. In addition, the unnecessary vibration of the detection arm AS2 can be measured based on the output of the differential amplifier circuit 128, in which the unnecessary signal from the detection arm AS2 is input to the input node NI2 as the detection signal S2.

However, in the case of the second comparative example of FIG. 6, not only the unnecessary signal due to the unnecessary vibration of the detection arm AS1, but also the unnecessary signal due to the unnecessary vibration of the detection arm AS2, is input to the input node NI1 of the differential amplifier circuit 128. Further, not only the unnecessary signal due to the unnecessary vibration of the detection arm AS2, but also the unnecessary signal due to the unnecessary vibration of the detection arm AS1, is input to the input node NI2 of the differential amplifier circuit 128. Accordingly, since it is not possible to individually measure the unnecessary signal due to the unnecessary vibration of each of the detection arms AS1 and AS2, there is a problem in that it is not possible to perform appropriate balance tuning.

Therefore, in the present embodiment, as illustrated in FIG. 1, the circuit device 20 includes the terminals T1 and T2 connected to the detection electrodes EL1A and EL1B of the detection arm AS1, and the terminals T3 and T4 connected to the detection electrodes EL2A and EL2B of the detection arm AS2. For example, in the first comparative example of FIG. 5 and the second comparative example of FIG. 6, only two terminals are provided as the terminals connected to the detection electrodes, whereas in the present embodiment, for example, the four terminals T1, T2, T3, and T4 are provided as the terminals connected to the detection electrodes. In addition, the detection signals S1A, S1B, S2A, and S2B from the detection electrodes EL1A, EL1B, EL2A, and EL2B can be input to the circuit device 20 through the four terminals T1, T2, T3, and T4. Moreover, in the present embodiment, the switches SW1A, SW1B, SW2A, and SW2B are provided between the terminals T1, T2, T3, and T4 and the input node NI1 or the input node NI2 of the differential amplifier circuit 128. To be specific, the switch SW1A is provided between the terminal T1 and the input node NI1, and the switch SW1B is provided between the terminal T2 and the input node NI2. Further, the switch SW2A is provided between the terminal T3 and the input node NI2, and the switch SW2B is provided between the terminal T4 and the input node NI1.

In this way, in the operation mode in which the physical quantity detection device 1 performs normal operation, for example, when the switches SW1A, SW1B, SW2A, and SW2B are turned on, the same connection configuration as that of FIG. 5 is obtained. This enables detection using the double wiring, which doubles the detection electrodes. That is, when the switches SW1A and SW2B are turned on in the operation mode, the detection signal S1A from the detection electrodes EL1A is input to the input node NI1 of the differential amplifier circuit 128 via the terminal T1 and the switch SW1A, and the detection signal S2B from the detection electrodes EL2B is input to the input node NI1 of the differential amplifier circuit 128 via the terminal T4 and the switch SW2B. As a result, the first sum signal, which is the sum signal composed of the detection signal S1A and the detection signal S2B, is input to the input node NI1 of the differential amplifier circuit 128. In addition, when the switches SW2A and SW1B are turned on in the operation mode, the detection signal S2A from the detection electrodes EL2A is input to the input node NI2 of the differential amplifier circuit 128 via the terminal T3 and the switch SW2A, and the detection signal S1B from the detection electrodes EL1B is input to the input node NI2 of the differential amplifier circuit 128 via the terminal T2 and the switch SW1B. As a result, the second sum signal, which is the sum signal composed of the detection signal S2A and the detection signal S1B, is input to the input node NI2 of the differential amplifier circuit 128. Accordingly, as described with reference to FIG. 4, the signal S1A+S2B, which is the first sum signal composed of the detection signals S1A and S2B, is input to the input node NI1, and the signal S2A+S1B, which is the second sum signal composed of the detection signals S2A and S1B, is input to the input node NI2. Thus, the differential amplifier circuit 128 can differentially amplify the first sum signal and the second sum signal. This makes it possible to perform detection using the double wiring, which doubles the detection electrodes, and improve the detection sensitivity of the physical quantity detection device 1.

On the other hand, in an inspection mode in which the balance tuning or the like of the physical quantity detection device 1 is performed, only the switch SW1A or only the switch SW2A is turned on, for example. For example, when only the switch SW1A is turned on in the inspection mode, the detection signal S1A from the detection electrodes EL1A of the detection arm AS1 is input to the differential amplifier circuit 128 via the terminal T1 and the switch SW1A. In this way, it is possible to measure the unnecessary signal due to the unnecessary vibration of the detection arm AS1 and perform balance tuning based on the measured value. Alternatively, when only the switch SW2A is turned on in the inspection mode, the detection signal S2A from the detection electrodes EL2A of the detection arm AS2 is input to the differential amplifier circuit 128 via the terminal T3 and the switch SW2A. In this way, it is possible to measure the unnecessary signal due to the unnecessary vibration of the detection arm AS2 and perform balance tuning based on the measured value. Therefore, in the inspection mode of the physical quantity detection device 1, it is possible to individually measure the respective unnecessary signals of the detection arms and perform balance tuning or the like. As described above, according to the physical quantity detection device 1 of the present embodiment, the circuit device 20 includes the terminals T1, T2, T3, and T4 and the switches SW1A, SW1B, SW2A, and SW2B. This makes it possible to realize both the improvement of the detection sensitivity using the double wiring and the balance tuning performed by individually measuring the respective unnecessary signals of the detection arms.

As described above, the physical quantity detection device 1 of the present embodiment includes the physical quantity detection element 10 and the circuit device 20 as illustrated in FIGS. 1 and 2. The physical quantity detection element 10 includes the plurality of detection arms (AS1, AS2, 19P, and 19Q), the plurality of drive arms (18P to 18S), and the base portion 21. Further, the circuit device 20 detects the physical quantity based on a plurality of detection signals from the plurality of detection arms.

As illustrated in FIGS. 1 and 2, the physical quantity detection element 10 includes the detection arm AS1 (19P) and the detection arm AS2 (19Q) as the plurality of detection arms. The detection arm AS1 includes the detection electrodes EL1A and the detection electrodes EL1B and extends from the base portion 21. The detection arm AS2 includes the detection electrodes EL2A and the detection electrodes EL2B, and extends from the base portion 21 in a direction opposite to a direction in which the detection arm AS1 extends from the base portion 21.

As illustrated in FIG. 1, the circuit device 20 includes the terminal T1 connected to the detection electrodes EL1A, the terminal T2 connected to the detection electrodes EL1B, the terminal T3 connected to the detection electrodes EL2A, the terminal T4 connected to the detection electrodes EL2B, and the amplifier circuit 120. The amplifier circuit 120 includes the differential amplifier circuit 128 and the switches SW1A, SW1B, SW2A, and SW2B. The switch SW1A is provided between the terminal T1 and the input node NI1 of the differential amplifier circuit 128, and the switch SW1B is provided between the terminal T2 and the input node NI2 of the differential amplifier circuit 128. The switch SW2A is provided between the terminal T3 and the input node NI2 of the differential amplifier circuit 128, and the switch SW2B is provided between the terminal T4 and the input node NI1 of the differential amplifier circuit 128. For example, another circuit or circuit element may be disposed between the terminals T1, T2, T3, and T4 and the switches SW1A, SW1B, SW2A, and SW2B, or between the switches SW1A, SW1B, SW2A, and SW2B and the input node NI1 or the input node NI2 of the differential amplifier circuit 128. The differential amplifier circuit 128 may have a charge/voltage conversion function and a differential amplification function, or may have only the differential amplification function.

According to the physical quantity detection device 1 of the embodiment having such a configuration, for example, in the operation mode (at the time of normal operation), the detection signal S1A from the detection electrodes EL1A and the detection signal S2B from the detection electrodes EL2B can be input to the input node NI1 of the differential amplifier circuit 128 via the terminal T1 and the switch SW1A and the terminal T4 and the switch SW2B, respectively. In addition, the detection signal S2A from the detection electrodes EL2A and the detection signal S1B from the detection electrodes EL1B can be input to the input node NI2 of the differential amplifier circuit 128 via the terminal T3 and the switch SW2A and the terminal T2 and the switch SW1B, respectively. As a result, for example, the sensitivity can be improved by the double wiring. On the other hand, in the inspection mode (at the time of inspection), for example, only the detection signal S1A from the detection electrodes EL1A of the detection arm AS1 can be input to the input node NI1 of the differential amplifier circuit 128 via the terminal T1 and the switch SW1A, or only the detection signal S2A from the detection electrodes EL2A of the detection arm AS2 can be input to the input node NI2 of the differential amplifier circuit 128 via the terminal T3 and the switch SW2A. This makes it possible to individually measure the detection signals in the detection arms AS1 and AS2 to perform balance tuning or the like. Accordingly, it is possible to realize both the improvement of the detection sensitivity of the physical quantity and adjustment such as balance tuning.

In the present embodiment, in the operation mode, the switches SW1A, SW1B, SW2A, and SW2B are turned on. With this configuration, for example, since the switches SW1A and SW2B are turned on, the detection signal S1A from the detection electrodes EL1A and the detection signal S2B from the detection electrodes EL2B are input to the input node NI1 of the differential amplifier circuit 128. In addition, since the switches SW2A and SW1B are turned on, the detection signal S2A from the detection electrodes EL2A and the detection signal S1B from the detection electrodes EL1B are input to the input node NI2 of the differential amplifier circuit 128. As a result, for example, the sensitivity can be improved by the double wiring.

In the operation mode, the first sum signal composed of the detection signal S1A input from the detection electrodes EL1A via the terminal T1 and the detection signal S2B input from the detection electrodes EL2B via the terminal T4 is input to the input node NI1 of the differential amplifier circuit 128. In the operation mode, the second sum signal composed of the detection signal S2A input from the detection electrodes EL2A via the terminal T3 and the detection signal S1B input from the detection electrodes EL1B via the terminal T2 is input to the input node NI2 of the differential amplifier circuit 128. The differential amplifier circuit 128 differentially amplifies the first sum signal (S1A+S2B) and the second sum signal (S2A+S1B). With this configuration, when the same physical quantity such as the angular velocity is detected, the amplitudes of the signals input to the input nodes NI1 and NI2 of the differential amplifier circuit 128 increase. It is thus possible to improve the detection sensitivity of the physical quantity. As a result, the S/N in the detection of the physical quantity improves, and noise reduction can be achieved.

Further, in the present embodiment, in the inspection mode, the switch SW1A is turned on and the switches SW1B, SW2A, and SW2B are turned off, or the switch SW2A is turned on and the switches SW1A, SW1B, and SW2B are turned off. With this configuration, when the switch SW1A is turned on and the switches SW1B, SW2A, and SW2B are turned off, only the detection signal S1A from the detection electrodes EL1A of the detection arm AS1 is input to the differential amplifier circuit 128, and it is possible to realize the inspection mode for measuring the unnecessary signal due to the unnecessary vibration of the detection arm AS1. Alternatively, when the switch SW2A is turned on and the switches SW1A, SW1B, and SW2B are turned off, only the detection signal S2A from the detection electrodes EL2A of the detection arm AS2 is input to the differential amplifier circuit 128, and it is possible to realize the inspection mode for measuring the unnecessary signal due to the unnecessary vibration of the detection arm AS2. Therefore, it is possible to perform adjustment such as the balance tuning of the physical quantity detection device 1.

When the inspection mode is a first inspection mode, the switch SW1A is turned on, and the switches SW1B, SW2A, and SW2B are turned off. The differential amplifier circuit 128, the input node NI2 of which is set to a constant potential, amplifies the detection signal S1A input from the detection electrodes EL1A to the input node NI1 via the terminal T1 and the switch SW1A. When the inspection mode is a second inspection mode, the switch SW2A is turned on, and the switches SW1A, SW1B, and SW2B are turned off. The differential amplifier circuit 128, the input node NI1 of which is set to a constant potential, amplifies the detection signal S2A input from the detection electrodes EL2A to the input node NI2 via the terminal T3 and the switch SW2A. With this configuration, in the first inspection mode, the detection signal S1A can be input to the input node NI1 of the differential amplifier circuit 128, the input node NI2 of which is set to the constant potential, via the terminal T1 and the switch SW1A, and the detection signal S1A can be amplified. Accordingly, it is possible to realize the first inspection mode for measuring the unnecessary signal due to the unnecessary vibration of the detection arm AS1. Further, in the second inspection mode, the detection signal S2A can be input to the input node NI2 of the differential amplifier circuit 128, the input node NI1 of which is set to the constant potential, via the terminal T3 and the switch SW2A, and the detection signal S2A can be amplified. Accordingly, it is possible to realize the second inspection mode for measuring the unnecessary signal due to the unnecessary vibration of the detection arm AS2.

In the first inspection mode, the switch SW1B sets the terminal T2 to a constant potential, and in the second inspection mode, the switch SW2B sets the terminal T4 to a constant potential. The constant potentials are, for example, a ground potential. With this configuration, in the first inspection mode, the switch SW1B sets the terminal T2 to the constant potential, and the detection electrodes EL1B connected to the terminal T2 are thereby set to the constant potential. Accordingly, it is possible to realize the first inspection mode in which the detection electrodes EL1B of the detection arm AS1 are set to the constant potential and the unnecessary signal from the detection electrodes EL1A is measured to inspect the unnecessary vibration or the like of the detection arm AS1. In the second inspection mode, the switch SW2B sets the terminal T4 to a constant potential, and the detection electrodes EL2B connected to the terminal T4 are thereby set to the constant potential. Accordingly, it is possible to realize the second inspection mode in which the detection electrodes EL2B of the detection arm AS2 are set to the constant potential and the unnecessary signal from the detection electrodes EL2A is measured to inspect the unnecessary vibration or the like of the detection arm AS2.

Note that the switches SW1A, SW2A, SW1B, and SW2B being turned on or off means that the terminals T1, T2, T3, and T4 are connected to or disconnected from the input node NI1 or the input node NI2 of the differential amplifier circuit 128. For example, in the first inspection mode, when the switch SW1A is turned on and the switches SW1B, SW2A, and SW2B are turned off, the switch SW1A connects the terminal T1 to the input node NI1, and the switches SW1B, SW2A, and SW2B disconnect the terminals T2, T3, and T4 from the input node NI1 or the input node NI2. In this case, the switch SW1B is connected to a constant potential such as ground. Further, in the second inspection mode, when the switch SW2A is turned on and the switches SW1A, SW1B, and SW2B are turned off, the switch SW2A connects the terminal T3 to the input node NI2, and the switches SW1A, SW1B, and SW2B disconnect the terminals T1, T2 and T4 from the input node NI1 or the input node NI2. In this case, the switch SW2B is connected to a constant potential such as ground.

### 3. Detailed Configuration Example

### 3.1 First Configuration Example

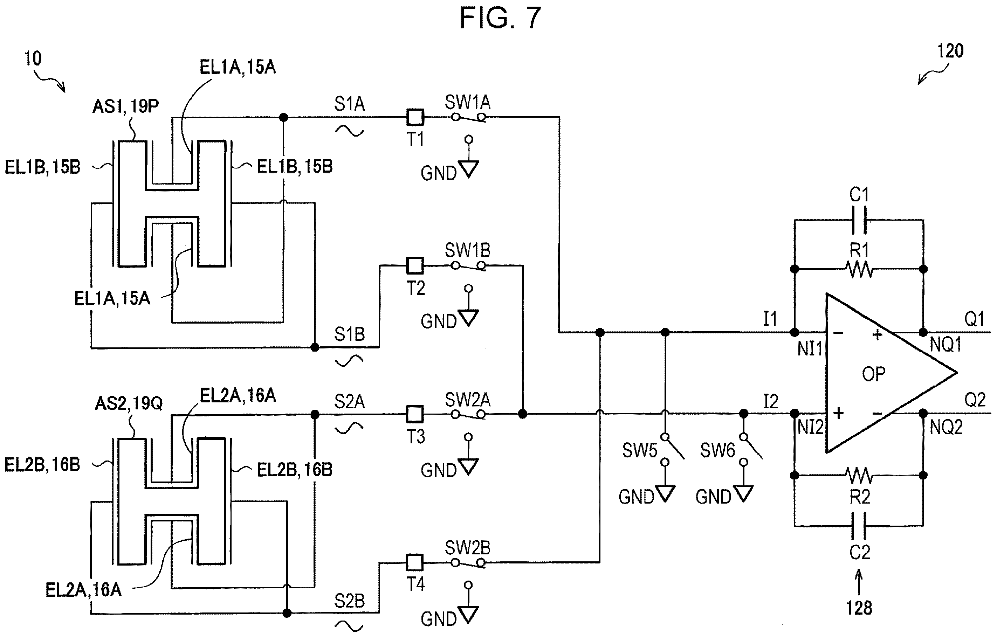

Next, a detailed configuration example of the present embodiment will be described. FIG. 7 illustrates a first configuration example of the amplifier circuit 120. In the first configuration example of FIG. 7, the switches SW1A, SW1B, SW2A, and SW2B are, for example, three-terminal switches. The switches SW1A, SW1B, SW2A, and SW2B can switch between connecting or disconnecting the terminals T1, T2, T3, and T4 to or from the input node NI1 or the input node NI2 of the differential amplifier circuit 128, and setting the terminals T1, T2, T3, and T4 to a constant potential such as ground. The switches SW1A, SW1B, SW2A, and SW2B in a second configuration example and a third configuration example, which will be described later, can also switch in the same way. For example, the switch SW1A can switch between connecting or disconnecting the terminal T1 to or from the input node NI1 of the differential amplifier circuit 128, and setting the terminal T1 to ground (which hereinafter refers to a constant potential in a broad sense). The switch SW2A can switch between connecting or disconnecting the terminal T2 to or from the input node NI2 of the differential amplifier circuit 128, and setting the terminal T2 to ground. The switches SW2A and SW2B can also switch in the same way. Only the switches SW1B and SW2B may have the function of setting the terminals to ground, and the switches SW1A and SW2A may not have the function.

The differential amplifier circuit 128 includes an operational amplifier OP, and resistors R1 and R2 and capacitors C1 and C2 for feedback. The operational amplifier OP has, for example, an inverting input terminal connected to the input node NI1 and a non-inverting input terminal connected to the input node NI2. The operational amplifier OP has a non-inverting output terminal connected to an output node NQ1 and an inverting output terminal connected to an output node NQ2. The output nodes NQ1 and NQ2 are first and second output nodes of the differential amplifier circuit 128, respectively. The resistor R1 and the capacitor C1 are provided in parallel between the input node NI1 and the output node NQ1. The resistor R2 and the capacitor C2 are provided in parallel between the input node NI2 and the output node NQ2. The differential amplifier circuit 128 having the above-described configuration can realize a differential amplification type charge/voltage conversion circuit (Q/V conversion circuit) having a charge/voltage conversion function of converting a charge signal into a voltage signal and a differential amplification function of amplifying a differential signal.

The amplifier circuit 120 of FIG. 7 includes switches SW5 and SW6. One end of the switch SW5 is connected to the input node NI1 of the differential amplifier circuit 128, and the other end thereof is set to a constant potential such as ground. One end of the switch SW6 is connected to the input node NI2 of the differential amplifier circuit 128, and the other end thereof is set to a constant potential such as ground. The switches SW5 and SW6 are a fifth switch and a sixth switch, respectively.

In the first configuration example, in the operation mode, the switches SW1A, SW1B, SW2A, SW2B, SW5, and SW6 are in a connection state as illustrated in FIG. 7. That is, the switch SW1A connects the terminal T1 to the input node NI1, and the switch SW1B connects the terminal T2 to the input node NI2. The switch SW2A connects the terminal T3 to the input node NI2, and the switch SW2B connects the terminal T4 to the input node NI1. In addition, the switches SW5 and SW6 are turned off, and disconnect from ground. With this configuration, the first sum signal composed of the detection signal S1A input from the detection electrodes EL1A via the terminal T1 and the detection signal S2B input from the detection electrodes EL2B via the terminal T4 is input to the input node NI1 of the differential amplifier circuit 128. In addition, the second sum signal composed of the detection signal S2A input from the detection electrodes EL2A via the terminal T3 and the detection signal S1B input from the detection electrodes EL1B via the terminal T2 is input to the input node NI2 of the differential amplifier circuit 128. The differential amplifier circuit 128 differentially amplifies the first sum signal and the second sum signal, and therefore it is possible to improve the detection sensitivity of the physical quantity.

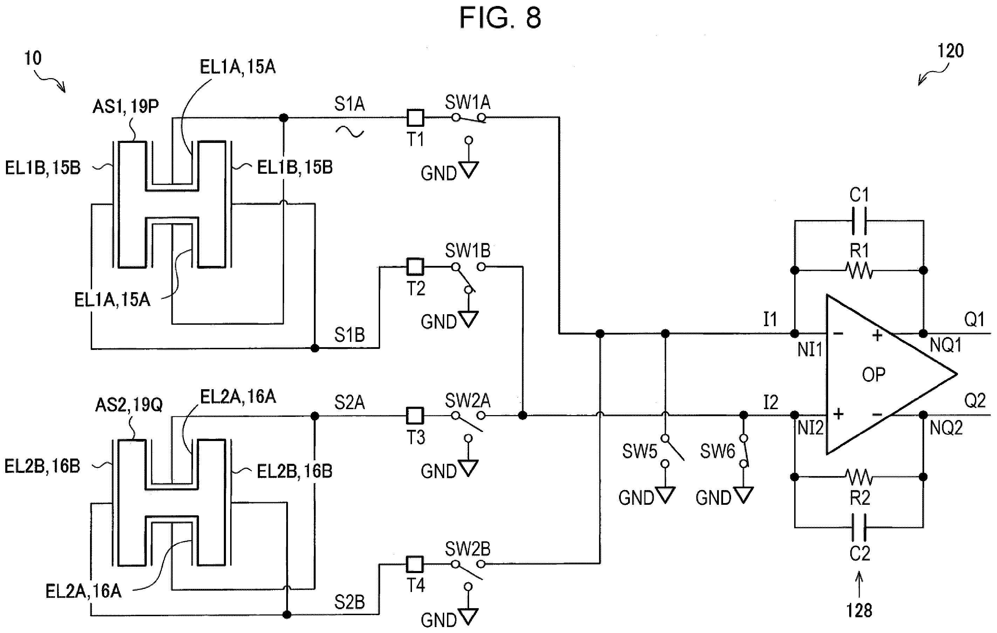

On the other hand, in the first configuration example, in the first inspection mode for inspecting the detection arm AS1, the switches SW1A, SW1B, SW2A, SW2B, SW5, and SW6 are in a connection state as illustrated in FIG. 8. That is, the switch SW1A is turned on and connects the terminal T1 to the input node NI1. On the other hand, the switches SW1B, SW2A, and SW2B disconnect the terminals T2, T3, and T4 from the input node NI1 or the input node NI2. The switch SW1B is connected to ground, and the terminal T2 is set to ground, which is a constant potential. The switch SW5 is turned off, whereas the switch SW6 is turned on. As a result, the input node NI2 is set to ground, which is a constant potential.

With this configuration, the detection signal S1A from the detection electrodes EL1A of the detection arm AS1 is input to the input node NI1 of the differential amplifier circuit 128 via the terminal T1 and the switch SW1A. The switch SW1B is connected to ground to set the terminal T2 to ground, and the detection electrodes EL1B of the detection arm AS1 are thereby set to ground. In addition, since the switches SW2A and SW2B are turned off, the detection signal S2A from the detection electrodes EL2A and the detection signal S2B from the detection electrodes EL2B of the detection arm AS2 are not input to the differential amplifier circuit 128. Moreover, since the switch SW6 is turned on, the input node NI2 of the differential amplifier circuit 128 is set to ground, which is a constant potential. Accordingly, it is possible to perform the balance tuning in which the detection signal S1A from the detection electrodes EL1A of the detection arm AS1 is measured as an unnecessary signal to measure the unnecessary vibration of the detection arm AS1. In the balance tuning, an unnecessary signal generated from the detection arm AS1 is measured, and the drive arm to be processed and the amount of processing on the drive arm are calculated according to the measured value.

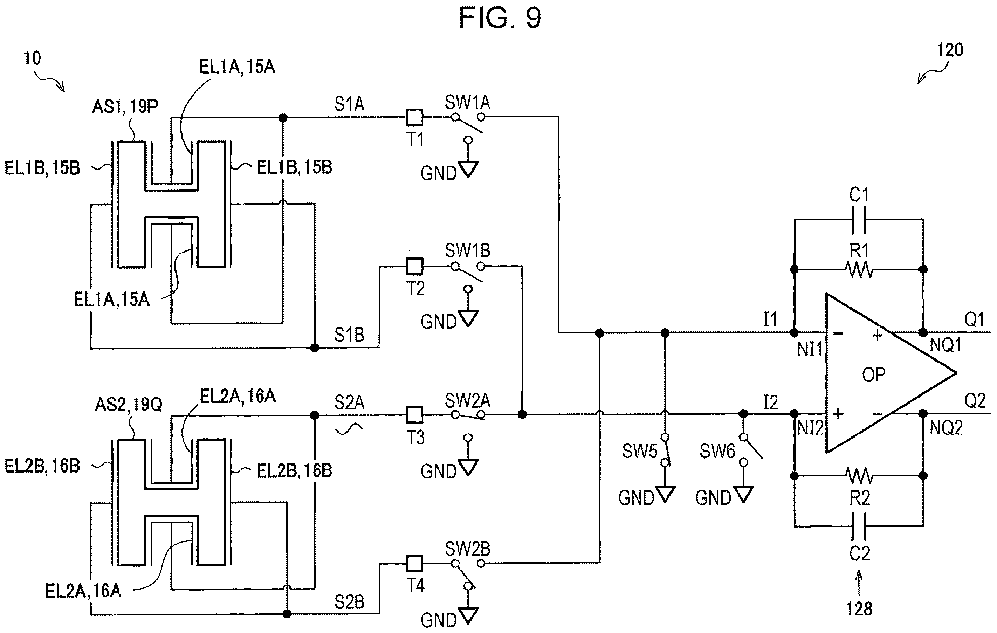

In the second inspection mode for inspecting the detection arm AS2, the switches SW1A, SW1B, SW2A, SW2B, SW5, and SW6 are in a connection state as illustrated in FIG. 9. That is, the switch SW2A is turned on and connects the terminal T3 to the input node NI2. On the other hand, the switches SW1A, SW1B, and SW2B disconnect the terminals T1, T2, and T4 from the input node NI1 or the input node NI2. The switch SW2B is connected to ground, and the terminal T4 is set to ground, which is a constant potential. The switch SW6 is turned off, whereas the switch SW5 is turned on. As a result, the input node NI1 is set to ground, which is a constant potential.

With this configuration, the detection signal S2A from the detection electrodes EL2A of the detection arm AS2 is input to the input node NI2 of the differential amplifier circuit 128 via the terminal T3 and the switch SW2A. The switch SW2B is connected to ground to set the terminal T4 to ground, and the detection electrodes EL2B of the detection arm AS2 are thereby set to ground. The switches SW1A and SW1B are turned off, and the detection signals S1A and S1B from the detection electrodes EL1A and EL1B of the detection arm AS1 are thus not input to the differential amplifier circuit 128. Moreover, since the switch SW5 is turned on, the input node NI1 of the differential amplifier circuit 128 is set to ground, which is a constant potential. Accordingly, it is possible to perform the balance tuning in which the detection signal S2A from the detection electrodes EL2A of the detection arm AS2 is measured as an unnecessary signal to measure the unnecessary vibration of the detection arm AS2.

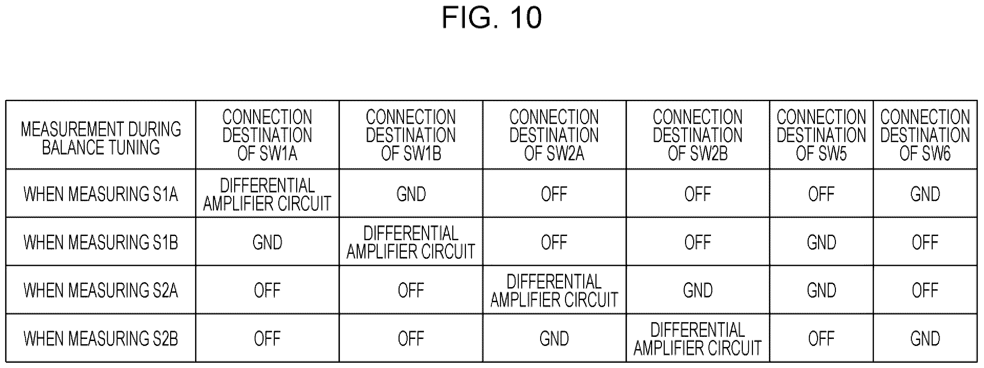

FIG. 10 is an explanatory diagram summarizing the operation of the first configuration example. As illustrated in FIG. 10, in the first inspection mode for measuring the detection signal S1A of the detection arm AS1, the switch SW1A is connected to the differential amplifier circuit 128, and the switch SW1B is connected to ground. Further, the switches SW2A, SW2B, and SW5 are turned off, and the switch SW6 is connected to ground. As a result, the detection electrodes EL1B of the detection arm AS1 are set to ground, and the detection signal S1A from the detection electrodes EL1A is input to the input node NI1 on the inverting input terminal side of the differential amplifier circuit 128 via the terminal T1 and the switch SW1A. The input node NI2 on the non-inverting input terminal side of the differential amplifier circuit 128 is set to ground. Therefore, by measuring output signals Q1 and Q2 from the differential amplifier circuit 128, it is possible to detect the unnecessary vibration of the detection arm AS1 to perform balance tuning.

In the second inspection mode for measuring the detection signal S2A of the detection arm AS2, the switch SW2A is connected to the differential amplifier circuit 128, and the switch SW2B is connected to ground. Further, the switches SW1A, SW1B, and SW6 are turned off, and the switch SW5 is connected to ground. As a result, the detection electrodes EL2B of the detection arm AS2 are set to ground, and the detection signal S2A from the detection electrodes EL2A is input to the input node NI2 on the non-inverting input terminal side of the differential amplifier circuit 128 via the terminal T3 and the switch SW2A. The input node NI1 on the inverting input terminal side of the differential amplifier circuit 128 is set to ground. Therefore, by measuring the output signals Q1 and Q2 from the differential amplifier circuit 128, it is possible to detect the unnecessary vibration of the detection arm AS2 to perform balance tuning.

As described above, in the present embodiment, when the inspection mode is the first inspection mode, the switch SW1A is turned on, and the switches SW1B, SW2A, and SW2B are turned off. For example, the switch SW1B disconnects the terminal T2 from the input node NI2, and is connected to ground to set the terminal T2 to ground. The differential amplifier circuit 128, the input node NI2 of which is set to ground by the switch SW6, amplifies the detection signal S1A input from the detection electrodes EL1A to the input node NI1 via the terminal T1 and the switch SW1A. When the inspection mode is the second inspection mode, the switch SW2A is turned on, and the switches SW1A, SW1B, and SW2B are turned off. For example, the switch SW2B disconnects the terminal T4 from the input node NI1, and is connected to ground to set the terminal T4 to ground. The differential amplifier circuit 128, the input node NI1 of which is set to ground by the switch SW5, amplifies the detection signal S2A input from the detection electrodes EL2A to the input node NI2 via the terminal T3 and the switch SW2A.

As illustrated in FIG. 10, the detection signal S1B may be measured to measure the unnecessary vibration of the detection arm AS1, or the detection signal S2B may be measured to measure the unnecessary vibration of the detection arm AS2. When the detection signal S1B is measured, the switch SW1B is connected to the differential amplifier circuit 128, and the switches SW1A and SW5 are connected to ground. When the detection signal S2B is measured, the switch SW2B is connected to the differential amplifier circuit 128, and the switches SW2A and SW6 are connected to ground.

For example, it is ideal that the levels of the unnecessary signals at the detection signals S1A, S1B, S2A, and S2B are all 0 after balance tuning. However, when balance tuning is performed to set the levels of the unnecessary signals at the detection signals S1A and S2A to 0 by measuring the detection signals S1A and S2A, the levels of the unnecessary signals at the detections signals S1B and S2B may not become 0. Therefore, it is desirable to measure all of the detection signals S1A, S1B, S2A, and S2B and perform balance tuning so that the levels of the unnecessary signals at the detection signals S1A, S1B, S2A, and S2B become equally small.

### 3.2 Second Configuration Example

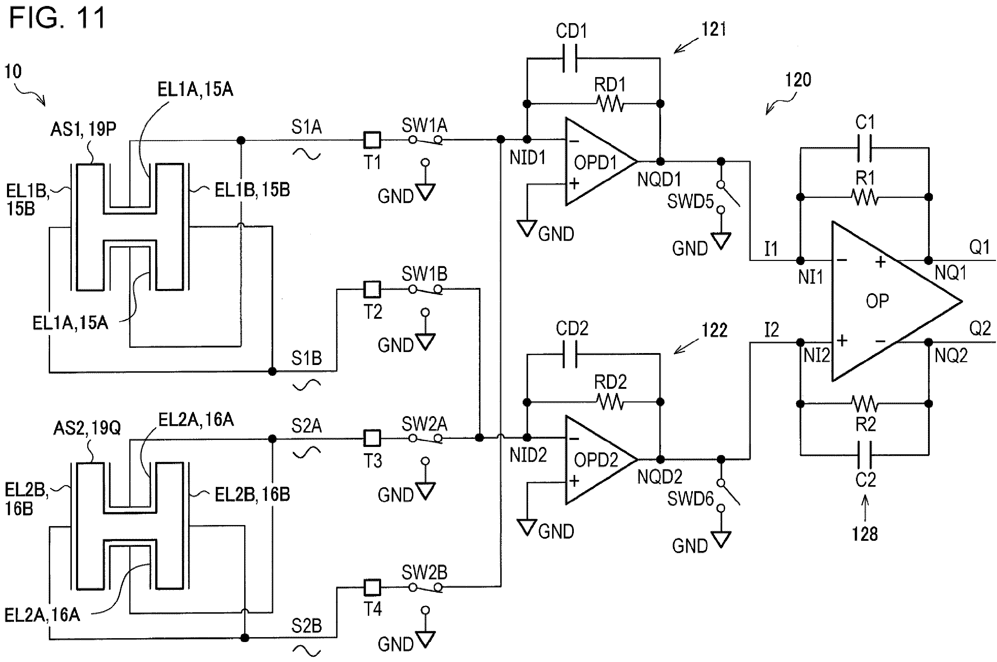

FIG. 11 illustrates the second configuration example of the amplifier circuit 120. In FIG. 11, the amplifier circuit 120 further includes amplifier circuits 121 and 122, in addition to the switches SW1A, SW1B, SW2A, and SW2B and the differential amplifier circuit 128. The amplifier circuit 120 also includes switches SWD5 and SWD6. The amplifier circuits 121 and 122 are a first amplifier circuit and a second amplifier circuit, respectively. The switches SWD5 and SWD6 are a fifth switch and a sixth switch, respectively.

For example, the amplifier circuit 121 is provided between the switches SW1A and SW2B and the input node NI1 of the differential amplifier circuit 128. The amplifier circuit 122 is provided between the switches SW2A and SW1B and the input node NI2 of the differential amplifier circuit 128. One end of the switch SWD5 is connected to the input node NI1 of the differential amplifier circuit 128, and the other end thereof is set to ground, which is a constant potential. One end of the switch SWD6 is connected to the input node NI2 of the differential amplifier circuit 128, and the other end thereof is set to ground, which is a constant potential. As described above, the switches SW1A, SW1B, SW2A, and SW2B are provided at least between the terminals T1, T2, T3, and T4 and the input node NI1 or the input node NI2 of the differential amplifier circuit 128. For example, as illustrated in FIG. 11, circuits or circuit elements such as the amplifier circuits 121 and 122 may be provided between the switches SW1A, SW1B, SW2A, and SW2B and the input node NI1 or the input node NI2 of the differential amplifier circuit 128.

The amplifier circuit 121 includes an operational amplifier OPD1, and a resistor RD1 and a capacitor CD1 for feedback. In the operational amplifier OPD1, one ends of the switches SW1A and SW2B are connected to an input node NID1 on the inverting input terminal side, and the non-inverting input terminal is set to ground, which is a constant potential. The resistor RD1 and the capacitor CD1 are provided in parallel between the input node NID1 and an output node NQD1 of the amplifier circuit 121. The input node NI1 of the differential amplifier circuit 128 is connected to the output node NQD1 of the amplifier circuit 121.

The amplifier circuit 122 includes an operational amplifier OPD2, and a resistor RD2 and a capacitor CD2 for feedback. In the operational amplifier OPD2, one ends of the switches SW2A and SW1B are connected to an input node NID2 on the inverting input terminal side, and the non-inverting input terminal is set to ground, which is a constant potential. The resistor RD2 and the capacitor CD2 are provided in parallel between the input node NID2 and an output node NQD2 of the amplifier circuit 122. The input node NI2 of the differential amplifier circuit 128 is connected to the output node NQD2 of the amplifier circuit 122. The amplifier circuits 121 and 122 are charge/voltage conversion circuits that convert the detection signals S1A, S1B, S2A, and S2B, which are charge signals, into voltage signals.

In the second configuration example, in the operation mode, the switches SW1A, SW1B, SW2A, SW2B, SWD5, and SWD6 are in a connection state as illustrated in FIG. 11. That is, the switches SW1A and SW2B are turned on, and the terminals T1 and T4 are thereby connected to the input node NI1 of the differential amplifier circuit 128 via the amplifier circuit 121. In addition, the switches SW2A and SW1B are turned on, and the terminals T3 and T2 are thereby connected to the input node NI2 of the differential amplifier circuit 128 via the amplifier circuit 122. With this configuration, the first sum signal composed of the detection signal S1A input to the terminal T1 and the detection signal S2B input to the terminal T4 is input to the input node NI1 of the differential amplifier circuit 128 via the amplifier circuit 121. Further, the second sum signal composed of the detection signal S2A input to the terminal T3 and the detection signal S1B input to the terminal T2 is input to the input node NI2 of the differential amplifier circuit 128 via the amplifier circuit 122. The differential amplifier circuit 128 differentially amplifies the first sum signal and the second sum signal, and therefore it is possible to improve the detection sensitivity of the physical quantity.

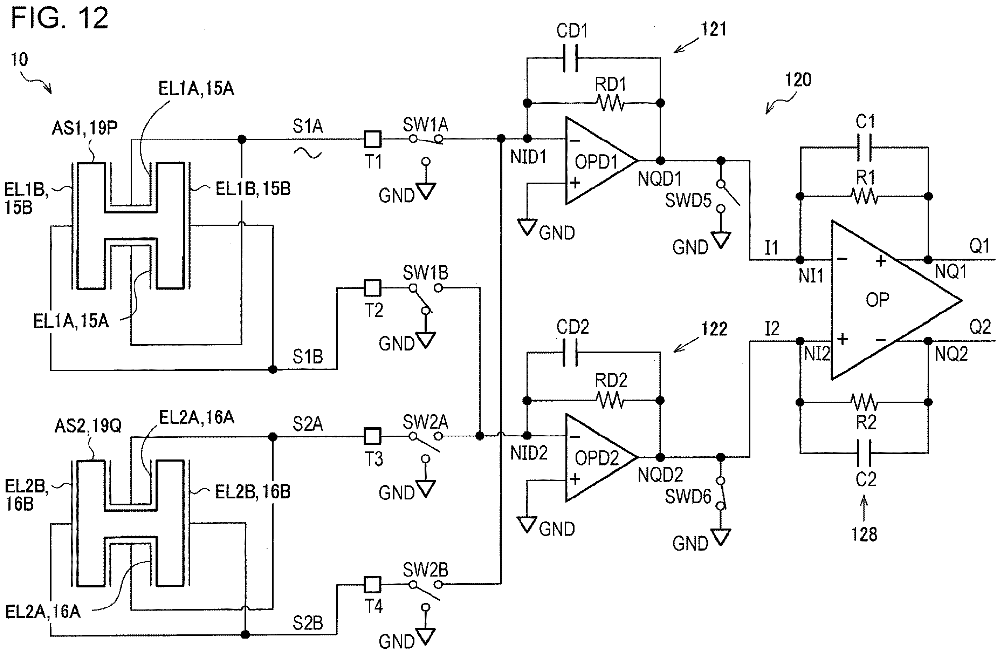

On the other hand, in the first inspection mode for inspecting the detection arm AS1, the switches SW1A, SW1B, SW2A, SW2B, SWD5, and SWD6 are in a connection state as illustrated in FIG. 12. The switch SW1A is turned on, and the detection signal S1A from the detection electrodes EL1A of the detection arm AS1 is thereby input to the input node NI1 of the differential amplifier circuit 128 via the terminal T1, the switch SW1A, and the amplifier circuit 121. The switch SW1B is connected to ground, and the detection electrodes EL1B of the detection arm AS1 are thereby set to ground. The switches SW2A and SW2B are turned off, and the detection signals S2A and S2B from the detection electrodes EL2A and EL2B of the detection arm AS2 are thus not input to the differential amplifier circuit 128. The switch SWD6 is turned on, and the input node NI2 of the differential amplifier circuit 128 is thereby set to ground. Accordingly, it is possible to perform the balance tuning in which the detection signal S1A from the detection electrodes EL1A of the detection arm AS1 is measured as an unnecessary signal to measure the unnecessary vibration of the detection arm AS1.

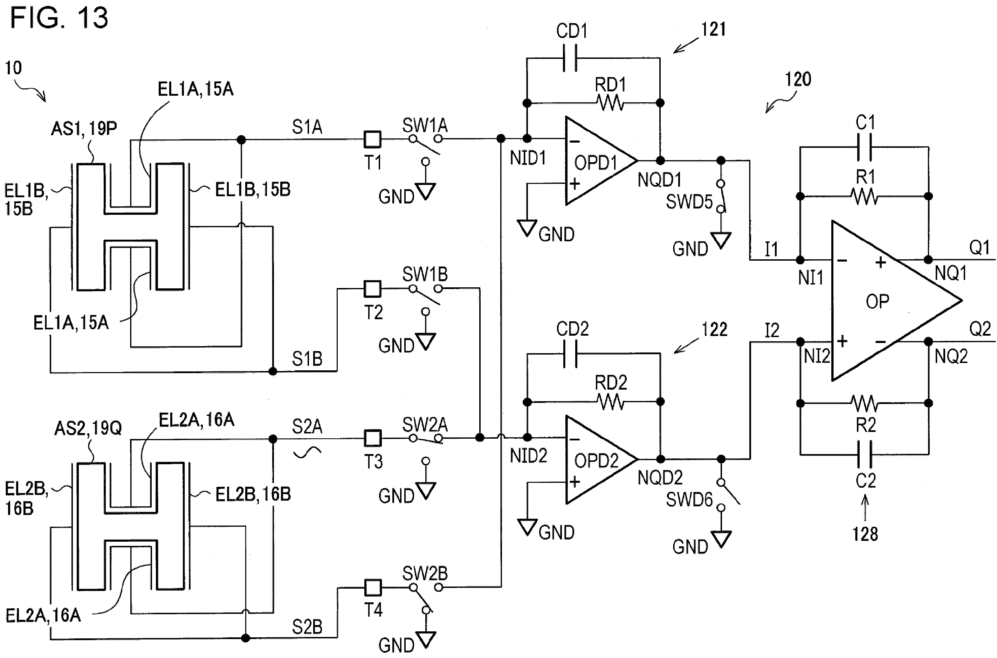

In the second inspection mode for inspecting the detection arm AS2, the switches SW1A, SW1B, SW2A, SW2B, SWD5, and SWD6 are in a connection state as illustrated in FIG. 13. The switch SW2A is turned on, and the detection signal S2A from the detection electrodes EL2A of the detection arm AS2 is thereby input to the input node NI2 of the differential amplifier circuit 128 via the terminal T3, the switch SW2A, and the amplifier circuit 122. The switch SW2B is connected to ground, and the detection electrodes EL2B of the detection arm AS2 are thereby set to ground. The switches SW1A and SW1B are turned off, and the detection signals S1A and S1B from the detection electrodes EL1A and EL1B of the detection arm AS1 are thus not input to the differential amplifier circuit 128. The switch SWD5 is turned on, and the input node NI1 of the differential amplifier circuit 128 is thereby set to ground. Accordingly, it is possible to perform the balance tuning in which the detection signal S2A from the detection electrodes EL2A of the detection arm AS2 is measured as an unnecessary signal to measure the unnecessary vibration of the detection arm AS2.

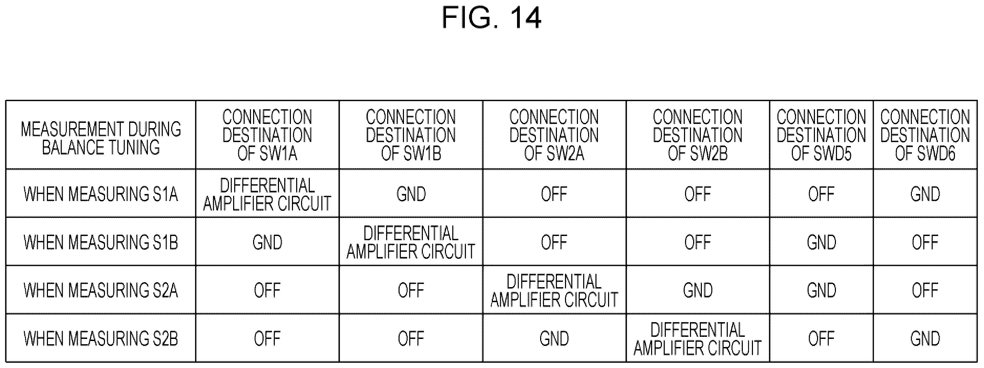

FIG. 14 is an explanatory diagram summarizing the operation of the second configuration example. Since the operation of the second configuration example is as described with reference to FIGS. 11, 12, and 13, a detailed description of FIG. 14 is omitted. Similarly to FIG. 10, FIG. 14 illustrates the connection state of the switches when the detection signals S1B and S2B are measured.

As described above, in the second configuration example of FIG. 11, the amplifier circuit 120 includes the amplifier circuit 121 provided between the switches SW1A and SW2B and the input node NI1 of the differential amplifier circuit 128, and the amplifier circuit 122 provided between the switches SW2A and SW1B and the input node NI2 of the differential amplifier circuit 128.

With this configuration, the detection signal S1A can be input to the input node NI1 of the differential amplifier circuit 128 via the switch SW1A and the amplifier circuit 121, and the detection signal S2B can be input to the input node NI1 of the differential amplifier circuit 128 via the switch SW2B and the amplifier circuit 121. Further, the detection signal S2A can be input to the input node NI2 of the differential amplifier circuit 128 via the switch SW2A and the amplifier circuit 122, and the detection signal S1B can be input to the input node NI2 of the differential amplifier circuit 128 via the switch SW1B and the amplifier circuit 122.

Accordingly, for example, in the operation mode, the first sum signal composed of the detection signals S1A and S2B can be input to the input node N11 of the differential amplifier circuit 128 via the amplifier circuit 121, and the second sum signal composed of the detection signals S2A and S1B can be input to the input node NI2 of the differential amplifier circuit 128 via the amplifier circuit 122. The differential amplifier circuit 128 differentially amplifies the first sum signal and the second sum signal, and therefore it is possible to improve the detection sensitivity of the physical quantity. In the inspection mode, the detection signal S1A can be input to the input node NI1 of the differential amplifier circuit 128 via the switch SW1A and the amplifier circuit 121 to measure the unnecessary signal of the detection arm AS1, and the detection signal S2A can be input to the input node NI2 of the differential amplifier circuit 128 via the switch SW2A and the amplifier circuit 122 to measure the unnecessary signal of the detection arm AS2. This makes it possible to individually measure the respective unnecessary signals of the detection arms to perform balance tuning or the like.

In the second configuration example, in the operation mode, the switches SW1A, SW1B, SW2A, and SW2B are turned on. On the other hand, in the inspection mode, the switch SW1A is turned on and the switches SW1B, SW2A, and SW2B are turned off, or the switch SW2A is turned on and the switches SW1A, SW1B, and SW2B are turned off. With this configuration, in the operation mode, since the switches SW1A and SW2B are turned on, the detection signals S1A and S2B from the detection electrodes EL1A and EL2B are input to the input node NI1 of the differential amplifier circuit 128. In addition, since the switches SW2A and SW1B are turned on, the detection signals S2A and S1B from the detection electrodes EL2A and EL1B are input to the input node NI2 of the differential amplifier circuit 128. Therefore, it is possible to improve the detection sensitivity of the physical quantity. In the inspection mode, since the switch SW1A is turned on and the switches SW1B, SW2A, and SW2B are turned off, only the detection signal S1A from the detection electrodes EL1A of the detection arm AS1 can be input to the differential amplifier circuit 128 to measure the unnecessary signal of the detection arm AS1. Alternatively, since the switch SW2A is turned on and the switches SW1A, SW1B, and SW2B are turned off, only the detection signal S2A from the detection electrodes EL2A of the detection arm AS2 can be input to the differential amplifier circuit 128 to measure the unnecessary signal of the detection arm AS2. Therefore, it is possible to perform adjustment such as the balance tuning of the physical quantity detection device 1.

In addition, in the second configuration example, the amplifier circuit 120 includes the switch SWD5 having one end connected to the input node NI1 of the differential amplifier circuit 128 and the other end set to ground, which is a constant potential, and the switch SWD6 having one end connected to the input node NI2 of the differential amplifier circuit 128 and the other end set to ground, which is a constant potential. In the operation mode, the switches SWD5 and SWD6 are turned off, and in the inspection mode, one of the switch SWD5 and the switch SWD6 is turned on. For example, the switch SWD6 is turned on in the first inspection mode for measuring the detection signal S1A, and the switch SWD5 is turned on in the second inspection mode for measuring the detection signal S2A. With this configuration, in the inspection mode in which the detection signal S1A is input to the input node NI1 of the differential amplifier circuit 128 to be measured, the input node NI2 of the differential amplifier circuit 128 is set to ground, which is a constant potential, so that the detection signal S1A can be appropriately measured. Further, in the inspection mode in which the detection signal S2A is input to the input node NI2 of the differential amplifier circuit 128 to be measured, the input node NI1 of the differential amplifier circuit 128 is set to ground, which is a constant potential, so that the detection signal S2A can be appropriately measured.

### 3.3 Third Configuration Example

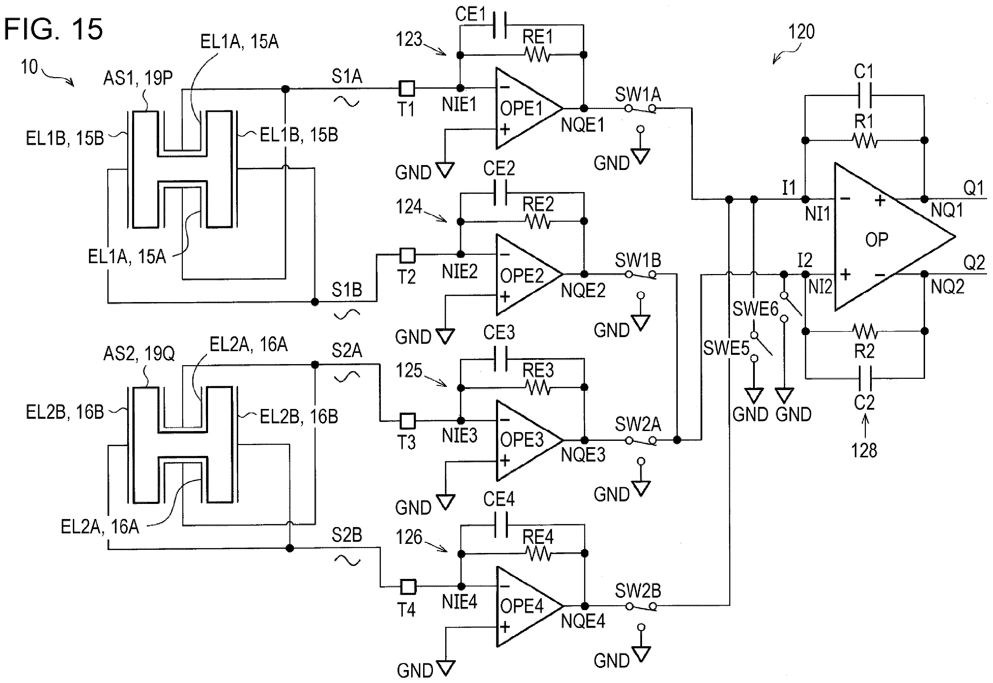

FIG. 15 illustrates the third configuration example of the amplifier circuit 120. In FIG. 15, the amplifier circuit 120 further includes amplifier circuits 123, 124, 125, and 126, in addition to the switches SW1A, SW1B, SW2A, and SW2B and the differential amplifier circuit 128. The amplifier circuit 120 also includes switches SWE5 and SWE6. The amplifier circuits 123, 124, 125, and 126 are a first amplifier circuit, a second amplifier circuit, a third amplifier circuit, and a fourth amplifier circuit, respectively. The switch SWE5 is a fifth switch, and the switch SWE6 is a sixth switch.

For example, the amplifier circuit 123 is provided between the terminal T1 and the switch SW1A, and the amplifier circuit 124 is provided between the terminal T2 and the switch SW1B. The amplifier circuit 125 is provided between the terminal T3 and the switch SW2A, and the amplifier circuit 126 is provided between the terminal T4 and the switch SW2B. One end of the switch SWE5 is connected to the input node NI1 of the differential amplifier circuit 128, and the other end thereof is set to ground, which is a constant potential. One end of the switch SWE6 is connected to the input node NI2 of the differential amplifier circuit 128, and the other end thereof is set to ground, which is a constant potential. As described above, the switches SW1A, SW1B, SW2A, and SW2B are provided at least between the terminals T1, T2, T3, and T4 and the input node NI1 or the input node NI2 of the differential amplifier circuit 128. For example, as illustrated in FIG. 15, circuits and circuit elements such as the amplifier circuits 123, 124, 125, and 126 may be provided between the terminals T1, T2, T3, and T4 and the switches SW1A, SW1B, SW2A, and SW2B.

The amplifier circuit 123 includes an operational amplifier OPE1, and a resistor RE1 and a capacitor CE1 for feedback. In the operational amplifier OPE1, the terminal T1 is connected to an input node NIE1 on the inverting input terminal side, and the non-inverting input terminal is set to ground. The resistor RE1 and the capacitor CE1 are provided in parallel between the input node NIE1 and an output node NQE1 of the amplifier circuit 123. One end of the switch SW1A is connected to the output node NQE1 of the amplifier circuit 123.

The amplifier circuit 124 includes an operational amplifier OPE2, and a resistor RE2 and a capacitor CE2 for feedback. In the operational amplifier OPE2, the terminal T2 is connected to an input node NIE2 on the inverting input terminal side, and the non-inverting input terminal is set to ground. The resistor RE2 and the capacitor CE2 are provided in parallel between the input node NIE2 and an output node NQE2 of the amplifier circuit 124. One end of the switch SW1B is connected to the output node NQE2 of the amplifier circuit 124.

The amplifier circuit 125 includes an operational amplifier OPE3, and a resistor RE3 and a capacitor CE3 for feedback. In the operational amplifier OPE3, the terminal T3 is connected to an input node NIE3 on the inverting input terminal side, and the non-inverting input terminal is set to ground. The resistor RE3 and the capacitor CE3 are provided in parallel between the input node NIE3 and an output node NQE3 of the amplifier circuit 125. One end of the switch SW2A is connected to the output node NQE3 of the amplifier circuit 125.

The amplifier circuit 126 includes an operational amplifier OPE4, and a resistor RE4 and a capacitor CE4 for feedback. In the operational amplifier OPE4, the terminal T4 is connected to an input node NIE4 on the inverting input terminal side, and the non-inverting input terminal is set to ground. The resistor RE4 and the capacitor CE4 are provided in parallel between the input node NIE4 and an output node NQE4 of the amplifier circuit 126. One end of the switch SW2B is connected to the output node NQE4 of the amplifier circuit 126. The amplifier circuits 123, 124, 125, and 126 are charge/voltage conversion circuits that convert the detection signals S1A, S1B, S2A, and S2B, which are charge signals, into voltage signals.

One ends of the switches SW1A, SW1B, SW2A, and SW2B are connected to the output nodes NQE1, NQE2, NQE3, and NQE4 of the amplifier circuits 123, 124, 125, and 126, respectively. The other ends of the switches SW1A and SW2B are connected to the input node NI1 of the differential amplifier circuit 128, and the other ends of the switches SW2A and SW1B are connected to the input node NI2 of the differential amplifier circuit 128.

In the third configuration example, in the operation mode, the switches SW1A, SW1B, SW2A, SW2B, SWE5, and SWE6 are in a connection state as illustrated in FIG. 15. That is, the switches SW1A and SW2B are turned on, and the terminals T1 and T4 are thereby connected to the input node NI1 of the differential amplifier circuit 128 via the amplifier circuits 123 and 126, respectively. In addition, the switches SW2A and SW1B are turned on, and the terminals T3 and T2 are thereby connected to the input node NI2 of the differential amplifier circuit 128 via the amplifier circuits 125 and 124, respectively. With this configuration, the first sum signal composed of the detection signal S1A input from the terminal T1 via the amplifier circuit 123 and the detection signal S2B input from the terminal T4 via the amplifier circuit 126 is input to the input node NI1 of the differential amplifier circuit 128. Further, the second sum signal composed of the detection signal S2A input from the terminal T3 via the amplifier circuit 125 and the detection signal S1B input from the terminal T2 via the amplifier circuit 124 is input to the input node NI2 of the differential amplifier circuit 128. The differential amplifier circuit 128 differentially amplifies the first sum signal and the second sum signal, and therefore it is possible to improve the detection sensitivity of the physical quantity.

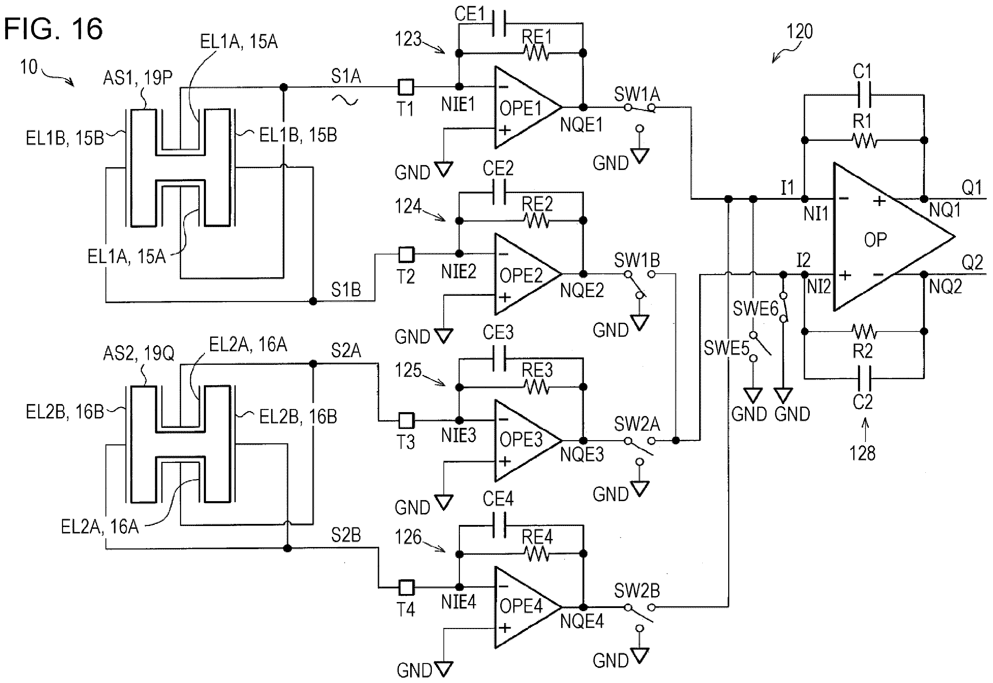

On the other hand, in the first inspection mode for inspecting the detection arm AS1, the switches SW1A, SW1B, SW2A, SW2B, SWE5, and SWE6 are in a connection state as illustrated in FIG. 16. The switch SW1A is turned on and the detection signal S1A from the detection electrodes EL1A of the detection arm AS1 is thereby input to the input node NI1 of the differential amplifier circuit 128 via the terminal T1, the amplifier circuit 123, and the switch SW1A. The switch SW1B is connected to ground, and the detection electrodes EL1B of the detection arm AS1 are thereby set to ground. The switches SW2A and SW2B are turned off, and the detection signals S2A and S2B from the detection electrodes EL2A and EL2B of the detection arm AS2 are thus not input to the differential amplifier circuit 128. The switch SWE6 is turned on, and the input node NI2 of the differential amplifier circuit 128 is thereby set to ground. Accordingly, it is possible to perform the balance tuning in which the detection signal S1A from the detection electrodes EL1A of the detection arm AS1 is measured as an unnecessary signal to measure the unnecessary vibration of the detection arm AS1.

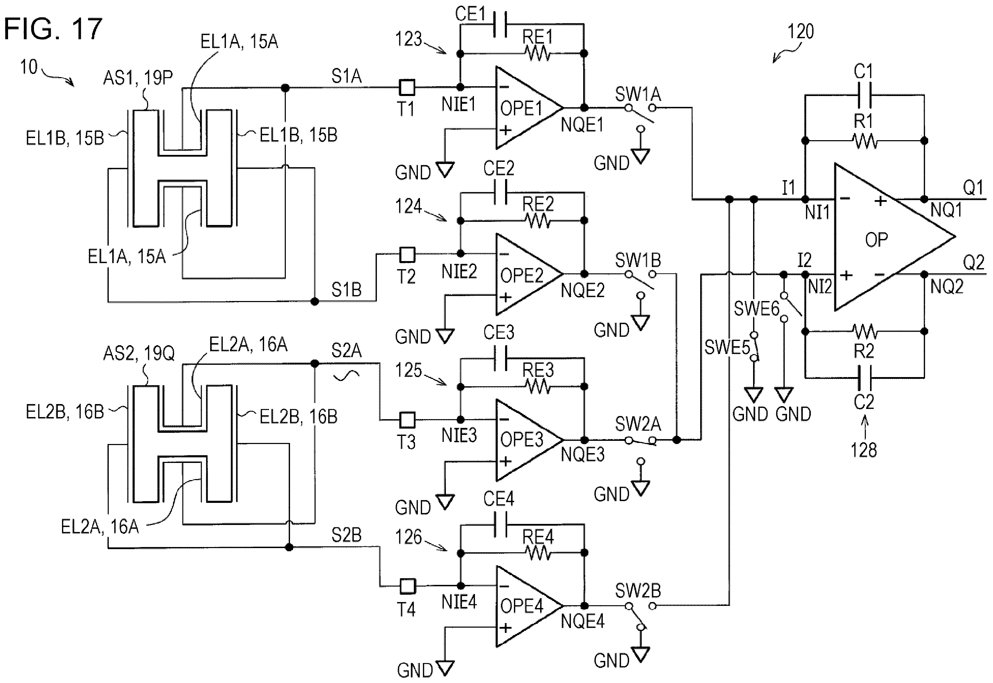

In the second inspection mode for inspecting the detection arm AS2, the switches SW1A, SW1B, SW2A, SW2B, SWE5, and SWE6 are in a connection state as illustrated in FIG. 17. The switch SW2A is turned on, and the detection signal S2A from the detection electrodes EL2A of the detection arm AS2 is thereby input to the input node NI2 of the differential amplifier circuit 128 via the terminal T3, the amplifier circuit 125, and the switch SW2A. The switch SW2B is connected to ground, and the detection electrodes EL2B of the detection arm AS2 are thereby set to ground. The switches SW1A and SW1B are turned off, and the detection signals S1A and S1B from the detection electrodes EL1A and EL1B of the detection arm AS1 are thus not input to the differential amplifier circuit 128. The switch SWE5 is turned on, and the input node NI1 of the differential amplifier circuit 128 is thereby set to ground. Accordingly, it is possible to perform the balance tuning in which the detection signal S2A from the detection electrodes EL2A of the detection arm AS2 is measured as an unnecessary signal to measure the unnecessary vibration of the detection arm AS2.

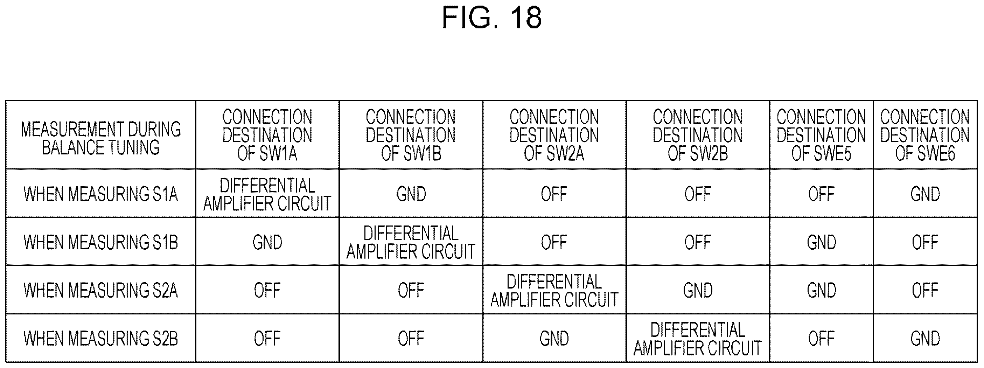

FIG. 18 is an explanatory diagram summarizing the operation of the third configuration example. Since the operation of the third configuration example is as described with reference to FIGS. 15, 16, and 17, a detailed description of FIG. 18 is omitted. Similarly to FIGS. 10 and 14, FIG. 18 illustrates the connection state of the switches when the detection signals S1B and S2B are measured.

As described above, in the third configuration example of FIG. 15, the amplifier circuit 120 includes the amplifier circuit 123 provided between the terminal T1 and the switch SW1A, the amplifier circuit 124 provided between the terminal T2 and the switch SW1B, the amplifier circuit 125 provided between the terminal T3 and the switch SW2A, and the amplifier circuit 126 provided between the terminal T4 and the switch SW2B.

With this configuration, the detection signal S1A can be input to the input node NI1 of the differential amplifier circuit 128 via the amplifier circuit 123 and the switch SW1A, and the detection signal S2B can be input to the input node NI1 of the differential amplifier circuit 128 via the amplifier circuit 126 and the switch SW2B. Further, the detection signal S2A can be input to the input node NI2 of the differential amplifier circuit 128 via the amplifier circuit 125 and the switch SW2A, and the detection signal S1B can be input to the input node NI2 of the differential amplifier circuit 128 via the amplifier circuit 124 and the switch SW1B.

Accordingly, for example, in the operation mode, the detection signals S1A and S2B can be input via the amplifier circuit 123 and the switch SW1A and the amplifier circuit 126 and the switch SW2B, respectively, and the first sum signal composed of the detection signals S1A and S2B can be input to the input node NI1 of the differential amplifier circuit 128. Further, the detection signals S2A and S1B can be input via the amplifier circuit 125 and the switch SW2A, and the amplifier circuit 124 and the switch SW1B, respectively, and the second sum signal composed of the detection signals S2A and S1B can be input to the input node NI2 of the differential amplifier circuit 128. The differential amplifier circuit 128 differentially amplifies the first sum signal and the second sum signal, and therefore it is possible to improve the detection sensitivity of the physical quantity. In the inspection mode, the detection signal S1A can be input to the input node NI1 of the differential amplifier circuit 128 via the amplifier circuit 123 and the switch SW1A to measure the unnecessary signal of the detection arm AS1, and the detection signal S2A can be input to the input node NI2 of the differential amplifier circuit 128 via the amplifier circuit 125 and the switch SW2A to measure the unnecessary signal of the detection arm AS2. This makes it possible to individually measure the respective unnecessary signals of the detection arms to perform balance tuning or the like.

In the third configuration example, in the operation mode, the switches SW1A, SW1B, SW2A, and SW2B are turned on. On the other hand, in the inspection mode, the switch SW1A is turned on and the switches SW1B, SW2A, and SW2B are turned off, or the switch SW2A is turned on and the switches SW1A, SW1B, and SW2B are turned off. With this configuration, in the operation mode, since the switches SW1A and SW2B are turned on, the detection signals S1A and S2B from the detection electrodes EL1A and EL2B are input to the input node NI1 of the differential amplifier circuit 128. In addition, since the switches SW2A and SW1B are turned on, the detection signals S2A and S1B from the detection electrodes EL2A and EL1B are input to the input node NI2 of the differential amplifier circuit 128. Therefore, it is possible to improve the detection sensitivity of the physical quantity. In the inspection mode, since the switch SW1A is turned on and the switches SW1B, SW2A, and SW2B are turned off, only the detection signal S1A from the detection electrodes EL1A of the detection arm AS1 can be input to the differential amplifier circuit 128 to measure the unnecessary signal of the detection arm AS1. Alternatively, since the switch SW2A is turned on and the switches SW1A, SW1B, and SW2B are turned off, only the detection signal S2A from the detection electrodes EL2A of the detection arm AS2 can be input to the differential amplifier circuit 128 to measure the unnecessary signal of the detection arm AS2. Therefore, it is possible to perform adjustment such as the balance tuning of the physical quantity detection device 1.

In addition, in the third configuration example, the amplifier circuit 120 includes the switch SWE5 having one end connected to the input node NI1 of the differential amplifier circuit 128 and the other end set to ground, which is a constant potential, and the switch SWE6 having one end connected to the input node NI2 of the differential amplifier circuit 128 and the other end set to ground, which is a constant potential. In the operation mode, the switches SWE5 and SWE6 are turned off, and in the inspection mode, one of the switch SWE5 and the switch SWE6 is turned on. For example, the switch SWE6 is turned on in the first inspection mode for measuring the detection signal S1A, and the switch SWE5 is turned on in the second inspection mode for measuring the detection signal S2A. With this configuration, in the inspection mode in which the detection signal S1A is input to the input node NI1 of the differential amplifier circuit 128 to be measured, the input node NI2 of the differential amplifier circuit 128 is set to ground, so that the detection signal S1A can be appropriately measured. Further, in the inspection mode in which the detection signal S2A is input to the input node NI2 of the differential amplifier circuit 128 to be measured, the input node NI1 of the differential amplifier circuit 128 is set to ground, so that the detection signal S2A can be appropriately measured.

As described above, the physical quantity detection device of the present embodiment includes a physical quantity detection element having a plurality of detection arms, a plurality of drive arms, and a base portion, and a circuit device that detects a physical quantity based on a plurality of detection signals from the plurality of detection arms of the physical quantity detection element. The physical quantity detection element includes, as the plurality of detection arms, a first detection arm including a first detection electrode and a second detection electrode and extending from the base portion, and a second detection arm including a third detection electrode and a fourth detection electrode and extending from the base portion in a direction opposite a direction in which the first detection arm extends from the base portion. The circuit device includes a first terminal connected to the first detection electrode, a second terminal connected to the second detection electrode, a third terminal connected to the third detection electrode, a fourth terminal connected to the fourth detection electrode, and an amplifier circuit. The amplifier circuit includes a differential amplifier circuit, a first switch provided between the first terminal and a first input node of the differential amplifier circuit, a second switch provided between the second terminal and a second input node of the differential amplifier circuit, a third switch provided between the third terminal and the second input node of the differential amplifier circuit, and a fourth switch provided between the fourth terminal and the first input node of the differential amplifier circuit.

According to the embodiment, for example, a first detection signal from the first detection electrode and a fourth detection signal from the fourth detection electrode can be input to the first input node of the differential amplifier circuit via the first terminal and the first switch, and the fourth terminal and the fourth switch, respectively. Further, a third detection signal from the third detection electrode and a second detection signal from the second detection electrode can be input to the second input node of the differential amplifier circuit via the third terminal and the third switch and the second terminal and the second switch, respectively. As a result, it is possible to realize the improvement of the detection sensitivity of the physical quantity and the like. Further, only the first detection signal from the first detection electrode of the first detection arm can be input to the first input node of the differential amplifier circuit via the first terminal and the first switch, or only the third detection signal from the third detection electrode of the second detection arm can be input to the second input node of the differential amplifier circuit via the third terminal and the third switch. Accordingly, it is possible to individually measure the detection signals of the first detection arm and the second detection arm. Therefore, it is possible to realize both the improvement of the detection sensitivity of the physical quantity and the individual measurement of the detection signals of the detection arms.

In the present embodiment, the first switch, the second switch, the third switch, and the fourth switch may be turned on in the operation mode.

With this configuration, since the first switch and the fourth switch are turned on, the first detection signal from the first detection electrode and the fourth detection signal from the fourth detection electrode are input to the first input node of the differential amplifier circuit. Further, since the third switch and the second switch are turned on, the third detection signal from the third detection electrode and the second detection signal from the second detection electrode are input to the second input node of the differential amplifier circuit. As a result, it is possible to realize the improvement of the detection sensitivity of the physical quantity and the like.

In the present embodiment, in the operation mode, a first sum signal composed of the first detection signal input from the first detection electrode via the first terminal and the fourth detection signal input from the fourth detection electrode via the fourth terminal may be input to the first input node of the differential amplifier circuit. In addition, a second sum signal composed of the third detection signal input from the third detection electrode via the third terminal and the second detection signal input from the second detection electrode via the second terminal may be input to the second input node of the differential amplifier circuit, and the differential amplifier circuit may differentially amplify the first sum signal and the second sum signal.

With this configuration, when the same physical quantity is detected, the amplitudes of the signals input to the first input node and the second input node of the differential amplifier circuit increase. It is thus possible to improve the detection sensitivity of the physical quantity and improve the S/N in the detection of the physical quantity.

In the present embodiment, in the inspection mode, the first switch may be turned on and the second, third, and fourth switches may be turned off, or the third switch may be turned on and the first, second, and fourth switches may be turned off.

With this configuration, it is possible to realize the inspection mode in which only the first detection signal from the first detection electrode of the first detection arm is input to the differential amplifier circuit to perform measurement on the first detection arm, or the inspection mode in which only the third detection signal from the third detection electrode of the second detection arm is input to the differential amplifier circuit to perform measurement on the second detection arm.

In the present embodiment, when the inspection mode is the first inspection mode, the first switch may be turned on, the second, third, and fourth switches may be turned off, and the differential amplifier circuit, the second input node of which is set to a constant potential, may amplify the first detection signal input from the first detection electrode to the first input node via the first terminal and the first switch. When the inspection mode is the second inspection mode, the third switch may be turned on, the first, second, and fourth switches may be turned off, and the differential amplifier circuit, the first input node of which is set to a constant potential, may amplify the third detection signal input from the third detection electrode to the second input node via the third terminal and the third switch.

With this configuration, in the first inspection mode, the first detection signal can be input to the first input node of the differential amplifier circuit, the second input node of which is set to a constant potential, via the first terminal and the first switch, and can be amplified. Further, in the second inspection mode, the third detection signal can be input to the second input node of the differential amplifier circuit, the first input node of which is set to a constant potential, via the third terminal and the third switch, and can be amplified.

In the present embodiment, the second switch may set the second terminal to a constant potential in the first inspection mode, and the fourth switch may set the fourth terminal to a constant potential in the second inspection mode.

With this configuration, in the first inspection mode, it is possible to realize the inspection mode in which the second detection electrode connected to the second terminal is set to a constant potential and the first detection arm is inspected. Further, in the second inspection mode, it is possible to realize the inspection mode in which the fourth detection electrode of the second detection arm is set to a constant potential and the second detection arm is inspected.

In the present embodiment, the amplifier circuit may include a first amplifier circuit provided between the first and fourth switches and the first input node of the differential amplifier circuit, and a second amplifier circuit provided between the third and second switches and the second input node of the differential amplifier circuit.

With this configuration, the first detection signal can be input to the first input node of the differential amplifier circuit via the first switch and the first amplifier circuit, and the fourth detection signal can be input to the first input node of the differential amplifier circuit via the fourth switch and the first amplifier circuit. Further, the third detection signal can be input to the second input node of the differential amplifier circuit via the third switch and the second amplifier circuit, and the second detection signal can be input to the second input node of the differential amplifier circuit via the second switch and the second amplifier circuit.

In the present embodiment, the first switch, the second switch, the third switch, and the fourth switch may be turned on in the operation mode. In the inspection mode, the first switch may be turned on and the second, third, and fourth switches may be turned off, or the third switch may be turned on and the first, second, and fourth switches may be turned off.

With this configuration, in the operation mode, the first detection signal and the fourth detection signal from the first and fourth detection electrodes are input to the first input node of the differential amplifier circuit, and the third detection signal and the second detection signal from the third and second detection electrodes are input to the second input node of the differential amplifier circuit. In the inspection mode, only the first detection signal from the first detection electrode of the first detection arm can be input to the differential amplifier circuit to measure the first detection arm, or only the third detection signal from the third detection electrode of the second detection arm can be input to the differential amplifier circuit to measure the second detection arm.

In the present embodiment, the amplifier circuit may include a fifth switch having one end connected to the first input node of the differential amplifier circuit and the other end set to a constant potential, and a sixth switch having one end connected to the second input node of the differential amplifier circuit and the other end set to a constant potential. The fifth switch and the sixth switch may be turned off in the operation mode, and one of the fifth switch and the sixth switch may be turned on in the inspection mode.

With this configuration, in the inspection mode in which the first detection signal is input to the first input node of the differential amplifier circuit to be measured, the second input node of the differential amplifier circuit is set to a constant potential, so that the first detection signal can be appropriately measured. In addition, in the inspection mode in which the third detection signal is input to the second input node of the differential amplifier circuit to be measured, the first input node of the differential amplifier circuit is set to a constant potential, so that the third detection signal can be appropriately measured.

In the present embodiment, the amplifier circuit may include a first amplifier circuit provided between the first terminal and the first switch, a second amplifier circuit provided between the second terminal and the second switch, a third amplifier circuit provided between the third terminal and the third switch, and a fourth amplifier circuit provided between the fourth terminal and the fourth switch.

With this configuration, the first detection signal can be input to the first input node of the differential amplifier circuit via the first amplifier circuit and the first switch, and the fourth detection signal can be input to the first input node of the differential amplifier circuit via the fourth amplifier circuit and the fourth switch. Further, the third detection signal can be input to the second input node of the differential amplifier circuit via the third amplifier circuit and the third switch, and the second detection signal can be input to the second input node of the differential amplifier circuit via the second amplifier circuit and the second switch.

In the present embodiment, the first switch, the second switch, the third switch, and the fourth switch may be turned on in the operation mode. In the inspection mode, the first switch may be turned on and the second, third, and fourth switches may be turned off, or the third switch may be turned on and the first, second, and fourth switches may be turned off.

With this configuration, in the operation mode, the first detection signal and the fourth detection signal from the first and fourth detection electrodes are input to the first input node of the differential amplifier circuit, and the third detection signal and the second detection signal from the third and second detection electrodes are input to the second input node of the differential amplifier circuit. In the inspection mode, only the first detection signal from the first detection electrode of the first detection arm can be input to the differential amplifier circuit to measure the first detection arm, or only the third detection signal from the third detection electrode of the second detection arm can be input to the differential amplifier circuit to measure the second detection arm.

In the present embodiment, the amplifier circuit may include a fifth switch having one end connected to the first input node of the differential amplifier circuit and the other end set to a constant potential, and a sixth switch having one end connected to the second input node of the differential amplifier circuit and the other end set to a constant potential. The fifth switch and the sixth switch may be turned off in the operation mode, and one of the fifth switch and the sixth switch may be turned on in the inspection mode.

With this configuration, in the inspection mode in which the first detection signal is input to the first input node of the differential amplifier circuit to be measured, the second input node of the differential amplifier circuit is set to a constant potential, so that the first detection signal can be appropriately measured. In addition, in the inspection mode in which the third detection signal is input to the second input node of the differential amplifier circuit to be measured, the first input node of the differential amplifier circuit is set to a constant potential, so that the third detection signal can be appropriately measured.

Although the present embodiment has been described in detail above, it will be easily understood by those skilled in the art that various modifications can be made without substantially departing from the novel features and effects of the present disclosure. Therefore, all such modifications are included in the scope of the present disclosure. For example, a term described together with a different term having a broader meaning or the same meaning at least once in the specification or the drawings can be replaced with the different term in any section of the specification or the drawings. In addition, the configurations and the like, of the physical quantity detection device, the physical quantity detection element, and the circuit device are not limited to those described in the present embodiment, and various modifications can be made.

## Claims

1. A physical quantity detection device comprising:
a physical quantity detection element including a plurality of detection arms, a plurality of drive arms, and a base portion; and
a circuit device that detects a physical quantity based on a plurality of detection signals from the plurality of detection arms of the physical quantity detection element,
the physical quantity detection element including, as the plurality of detection arms:
a first detection arm including a first detection electrode and a second detection electrode and extending from the base portion; and
a second detection arm including a third detection electrode and a fourth detection electrode and extending from the base portion in a direction opposite to a direction in which the first detection arm extends from the base portion,
the circuit device including:
a first terminal connected to the first detection electrode;
a second terminal connected to the second detection electrode;
a third terminal connected to the third detection electrode;
a fourth terminal connected to the fourth detection electrode; and
an amplifier circuit,
the amplifier circuit including:
a differential amplifier circuit;
a first switch provided between the first terminal and a first input node of the differential amplifier circuit;
a second switch provided between the second terminal and a second input node of the differential amplifier circuit;
a third switch provided between the third terminal and the second input node of the differential amplifier circuit; and
a fourth switch provided between the fourth terminal and the first input node of the differential amplifier circuit.

2. The physical quantity detection device according to claim 1, wherein
in an operation mode,
the first switch, the second switch, the third switch, and the fourth switch are turned on.

3. The physical quantity detection device according to claim 2, wherein
in the operation mode,
the differential amplifier circuit differentially amplifies a first sum signal input to the first input node and a second sum signal input to the second input node, the first sum signal including a first detection signal input from the first detection electrode via the first terminal and a fourth detection signal input from the fourth detection electrode via the fourth terminal, the second sum signal including a third detection signal input from the third detection electrode via the third terminal and a second detection signal input from the second detection electrode via the second terminal.

4. The physical quantity detection device according to claim 1, wherein
in an inspection mode,
the first switch is turned on and the second switch, the third switch, and the fourth switch are turned off, or the third switch is turned on and the first switch, the second switch, and the fourth switch are turned off.

5. The physical quantity detection device according to claim 4, wherein
when the inspection mode is a first inspection mode,
the first switch is turned on and the second switch, the third switch, and the fourth switch are turned off, and
the differential amplifier circuit, the second input node of which is set to a constant potential, amplifies a first detection signal input from the first detection electrode to the first input node via the first terminal and the first switch, and
when the inspection mode is a second inspection mode,
the third switch is turned on and the first switch, the second switch, and the fourth switch are turned off, and
the differential amplifier circuit, the first input node of which is set to a constant potential, amplifies a third detection signal input from the third detection electrode to the second input node via the third terminal and the third switch.

6. The physical quantity detection device according to claim 5, wherein
in the first inspection mode,
the second switch sets the second terminal to a constant potential, and
in the second inspection mode,
the fourth switch sets the fourth terminal to a constant potential.

7. The physical quantity detection device according to claim 1, wherein
the amplifier circuit includes:
a first amplifier circuit provided between the first and fourth switches and the first input node of the differential amplifier circuit; and
a second amplifier circuit provided between the third and second switches and the second input node of the differential amplifier circuit.

8. The physical quantity detection device according to claim 7, wherein
in an operation mode,
the first switch, the second switch, the third switch, and the fourth switch are turned on, and
in an inspection mode,
the first switch is turned on and the second switch, the third switch, and the fourth switch are turned off, or the third switch is turned on and the first switch, the second switch, and the fourth switch are turned off.

9. The physical quantity detection device according to claim 8, wherein
the amplifier circuit includes:
a fifth switch having one end connected to the first input node of the differential amplifier circuit and another end set to a constant potential; and
a sixth switch having one end connected to the second input node of the differential amplifier circuit and another end set to a constant potential,
in the operation mode, the fifth switch and the sixth switch are turned off, and
in the inspection mode, one of the fifth switch and the sixth switch is turned on.

10. The physical quantity detection device according to claim 1, wherein
the amplifier circuit includes:
a first amplifier circuit provided between the first terminal and the first switch;
a second amplifier circuit provided between the second terminal and the second switch;
a third amplifier circuit provided between the third terminal and the third switch; and
a fourth amplifier circuit provided between the fourth terminal and the fourth switch.

11. The physical quantity detection device according to claim 10, wherein
in an operation mode,
the first switch, the second switch, the third switch, and the fourth switch are turned on, and
in an inspection mode,
the first switch is turned on and the second switch, the third switch, and the fourth switch are turned off, or the third switch is turned on and the first switch, the second switch, and the fourth switch are turned off.

12. The physical quantity detection device according to claim 11, wherein
the amplifier circuit includes:
a fifth switch having one end connected to the first input node of the differential amplifier circuit and another end set to a constant potential; and
a sixth switch having one end connected to the second input node of the differential amplifier circuit and another end set to a constant potential,
in the operation mode, the fifth switch and the sixth switch are turned off, and
in the inspection mode, one of the fifth switch and the sixth switch is turned on.
